(19) **Europäisches Patentamt European Patent Office Office européen des brevets**

(11) **EP 4 421 105 A1**

(12) **EUROPEAN PATENT APPLICATION**
published in accordance with Art. 153(4) EPC

(43) Date of publication:
**28.08.2024 Bulletin 2024/35**

(21) Application number: **22883818.1**

(22) Date of filing: **30.09.2022**

(51) International Patent Classification (IPC):
*C08G 63/16* (2006.01)   *C08G 63/181* (2006.01)
*C08G 63/78* (2006.01)   *C08L 67/02* (2006.01)
*C08L 1/02* (2006.01)   *B32B 27/10* (2006.01)
*B32B 27/36* (2006.01)

(52) Cooperative Patent Classification (CPC):
**B32B 27/10; B32B 27/36; C08G 63/16;
C08G 63/181; C08G 63/78; C08L 1/02; C08L 67/02**

(86) International application number:
**PCT/KR2022/014770**

(87) International publication number:
**WO 2023/068594 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.10.2021 KR 20210140565**

(71) Applicant: **SK leaveo Co., Ltd.
Gyeonggi-do 16338 (KR)**

(72) Inventors:
• **KIM, Kyung Youn
Suwon-si, Gyeonggi-do 16338 (KR)**
• **KIM, Hoon
Suwon-si, Gyeonggi-do 16338 (KR)**
• **KIM, Seong Dong
Suwon-si, Gyeonggi-do 16338 (KR)**

(74) Representative: **Dehns
St. Bride's House
10 Salisbury Square
London EC4Y 8JD (GB)**

(54) **BIODEGRADABLE POLYESTER RESIN, AND BIODEGRADABLE POLYESTER FILM AND LAMINATE COMPRISING SAME**

(57) The present invention relates to: a biodegradable polyester resin in which a ratio of the number of first repeating units, including first diol residues and aromatic dicarboxylic acid residues, and the number of second repeating units, including second diol residues and aliphatic dicarboxylic acid residues, is 0.2-1.4, and the index of adhesion is 8 or more; and a method for preparing same. A biodegradable polyester film or biodegradable laminate prepared from the biodegradable polyester resin not only has excellent heat resistance compared to the case of using conventionally used biodegradable resins, but also has excellent adhesion to various other substrates as well as the same substrate, and thus can be used in various ways as an eco-friendly biodegradable adhesive product.

[Fig. 1]

S100

S110
Pretreatment to obtain a slurry

S120
Performing an esterification reaction
at least once to obtain a prepolymer

S130
Subjecting the prepolymer to a
polycondensation reaction

Preparing a biodegradable polyester
resin

Processed by Luminess, 75001 PARIS (FR)

EP 4 421 105 A1

**Description**

**Technical Field**

The present invention relates to a biodegradable polyester resin and to a biodegradable polyester film and a biodegradable laminate each comprising the same.

**Background Art**

Heat adhesive films commonly used include polyvinyl chloride (PVC), coextruded polyethylene terephthalate (PET), low-density polyethylene (LDPE), and cast polypropylene (CPP).

All of the above heat adhesive films originate from petroleum-based starting materials. In particular, PVC is not environmentally friendly since it generates harmful substances such as dioxin when discarded (incinerated).

Meanwhile, in recent years, polylactic acid (PLA) films, which is an aliphatic polyester with degradability of the resin itself, have been used. However, in order to adhere the PLA sides of these films, an amorphous resin needs to be used, and the adhesive strength with other substrates is weak. In addition, there may be a problem in that the thermal shrinkage rate is high due to the weak thermal resistance characteristics of the amorphous resin in its nature.

Various attempts have been made to improve this, such as using a crystalline resin and an amorphous resin to co-extrude two or more resin layers, which is not economical in terms of cost, and the manufacturing process is complicated.

Accordingly, it is necessary to develop a polymer resin that can be used as a biodegradable adhesive product such as an environmentally friendly adhesive or heat adhesive film that has excellent thermal resistance characteristics, along with excellent adhesive strength between the same substrates and with other substrates.

[Prior Art Document]

[Patent Document]

(Patent Document 1) Korean Patent No. 10-0584054

**Detailed Description of the Invention**

**Technical Problem**

An object of the present invention is to provide a biodegradable polyester resin that is biodegradable and has excellent thermal resistance characteristics, along with excellent adhesion characteristics with other substrates such as paper, foamed plastic, a steel substrate, a fluorine film, a polyethylene terephthalate (PET) film, a polyimide (PI) film, a polypropylene (PP) film, and a polyethylene (PE) film, and a process for preparing the same.

Another object of the present invention is to provide a biodegradable polyester film and a biodegradable laminate prepared using the biodegradable polyester resin that has thermal resistant characteristics and adhesion characteristics, and is biodegradable, so that it can be advantageously used as an environmentally friendly biodegradable adhesive product.

**Solution to the Problem**

The present invention provides a biodegradable polyester resin that comprises a first repeat unit comprising a first diol residue and an aromatic dicarboxylic acid residue and a second repeat unit comprising a second diol residue and an aliphatic dicarboxylic acid residue, wherein the ratio (X/Y) of the number of the first repeat unit (X) to the number of the second repeat unit (Y) is 0.2 to 1.4, and the adhesion index (AI) represented by the following Equation 1 is 8 or more:

$$[\text{Equation 1}]$$

$$\text{Adhesion index (AI)} = \frac{AS}{Tm}$$

In Equation 1, AS is the adhesive strength (gf), excluding the unit, measured as the maximum stress when one side of a biodegradable polyester film specimen having a width of 15 mm and a length of 150 mm prepared from the biodegradable polyester resin and one side of a polyethylene terephthalate (PET) film are subjected to thermal adhesion with each other at 130°C and then delaminated at a peeling angle of 180° and a peeling speed of 300 mm/minute, and Tm is the melting temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

In addition, the present invention provides a process for preparing a biodegradable polyester resin that comprises a first step of mixing a diol component and an aromatic dicarboxylic acid and pretreating it to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number of the first repeat unit (X) to the number of the second repeat unit (Y) is 0.2 to 1.4, and the adhesion index (AI) represented by the above Equation 1 is 8 or more.

In addition, the present invention provides a biodegradable polyester film that comprises the biodegradable polyester resin.

In addition, the present invention provides a biodegradable laminate that comprises a substrate layer and a biodegradable polyester resin layer formed on the substrate layer, wherein the polyester resin layer comprises a polyester resin, the polyester resin comprises a first repeat unit comprising a first diol residue and an aromatic dicarboxylic acid residue and a second repeat unit comprising a second diol residue and an aliphatic dicarboxylic acid residue, in which the ratio (X/Y) of the number of the first repeat unit (X) to the number of the second repeat unit (Y) is 0.2 to 1.4, and when one side of the biodegradable polyester resin layer having a width of 15 mm and a length of 150 mm and one side of paper are subjected to thermal adhesion with each other at 130°C and then delaminated at a peeling angle of 180° and a peeling speed of 300 mm/minute, the adhesive strength as the maximum stress is 1,000 gf or more.

## Advantageous Effects of the Invention

The biodegradable polyester resin of the present invention comprises a first repeat unit comprising a first diol residue and an aromatic dicarboxylic acid residue and a second repeat unit comprising a second diol residue and an aliphatic dicarboxylic acid residue, and the ratio of the number of repeat units satisfies a specific range, and the adhesion index of the resin satisfies a specific range or more. Thus, it is biodegradable and has excellent thermal resistance characteristics as compared with conventional biodegradable resins, while it has excellent adhesive strength between the same substrates as well as excellent adhesive strength with other various substrates such as paper, foamed plastic, a steel substrate, a fluorine film, a polyethylene terephthalate (PET) film, a polyimide (PI) film, a polypropylene (PP) film, and a polyethylene (PE) film, and it has a significantly low reduction rate of adhesive strength after a pressure cooker test (PCT). Accordingly, the biodegradable polyester resin can be variously used as a biodegradable adhesive product such as an environmentally friendly adhesive film or adhesive with high quality.

In addition, the process for preparing a biodegradable polyester resin can provide a biodegradable polyester resin that is biodegradable and has excellent thermal resistance characteristics and adhesion characteristics, and an adhesive product comprising the same, in a simple manufacturing process and an economical and efficient way.

## Brief Description of the Drawing

Fig. 1 schematically shows the process for preparing a biodegradable polyester resin according to an embodiment.
Fig. 2 is a graph showing the changes in calories in the endothermic and exothermic curves of the polyester resin of Example 4 measured using a differential scanning calorimeter (DSC).

## Best Mode for Carrying out the Invention

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In the present specification, a singular expression is understood to encompass a singular or plural expression, interpreted in context, unless otherwise specified.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

In addition, the references for "one side" and "the other side" or "on" and "under" of each component are only for distinguishing components and may be interchanged with each other in actual application.

In the present specification, in the case where an element is mentioned to be formed "on" or "under" another element, it means not only that one element is directly formed "on" or "under" another element, but also that one element is indirectly formed on or under another element with other element(s) interposed between them.

According to an embodiment of the present invention, there is provided a biodegradable polyester resin, which comprises a first repeat unit comprising a first diol residue and an aromatic dicarboxylic acid residue and a second repeat unit comprising a second diol residue and an aliphatic dicarboxylic acid residue, wherein the ratio (X/Y) of the number of the first repeat unit (X) to the number of the second repeat unit (Y) is 0.2 to 1.4, and the adhesion index (AI) represented by the following Equation 1 is 8 or more:

$$[\text{Equation 1}]$$

$$\text{Adhesion index (AI)} = \frac{AS}{Tm}$$

In Equation 1, AS is the adhesive strength (gf), excluding the unit, measured as the maximum stress when one side of a biodegradable polyester film specimen having a width of 15 mm and a length of 150 mm prepared from the biodegradable polyester resin and one side of a polyethylene terephthalate (PET) film are subjected to thermal adhesion with each other at 130°C and then delaminated at a peeling angle of 180° and a peeling speed of 300 mm/minute, and Tm is the melting temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

In general, biodegradable polyester resins with excellent biodegradability, such as polybutyleneadipate terephthalate (PBAT)-based resins, have excellent biodegradability, whereas they have weak adhesion characteristics with other substrates and poor thermal resistance characteristics, making it difficult to be used as a biodegradable adhesive product.

According to an embodiment of the present invention, the composition of a biodegradable polyester resin is adjusted, in particular, the ratio (X/Y) of the number of a first repeat unit (X) comprising a first diol residue and an aromatic dicarboxylic acid residue to the number of a second repeat unit (Y) comprising a second diol residue and an aliphatic dicarboxylic acid residue is adjusted, and the melting point of the biodegradable polyester resin and the adhesive strength of a biodegradable polyester film prepared from the biodegradable polyester resin are adjusted to appropriate ranges to satisfy a specific range of the adhesion index. As a result, it is possible to provide a biodegradable polyester resin that is finally biodegradable, has excellent thermal resistance characteristics, while it has excellent adhesive strength between the same resins, as well as excellent adhesive strength with other various substrates such as paper, foamed plastic, a steel substrate, a fluorine film, a polyethylene terephthalate (PET) film, a polyimide (PI) film, a polypropylene (PP) film, and a polyethylene (PE) film, and has a significantly low reduction rate of adhesive strength after a pressure cooker test (PCT).

Accordingly, it is of technical significance that the biodegradable polyester resin according to an embodiment of the present invention can be variously used as an environmentally friendly biodegradable adhesive product.

Hereinafter, the biodegradable polyester resin will be described in more detail.

**Biodegradable polyester resin**

The biodegradable polyester resin according to an embodiment of the present invention comprises a first repeat unit comprising a first diol residue and an aromatic dicarboxylic acid residue and a second repeat unit comprising a second diol residue and an aliphatic dicarboxylic acid residue.

The first diol residue and the second diol residue each comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, and the aliphatic dicarboxylic acid residue comprises a residue of adipic acid, succinic acid, suberic acid, sebacic acid, or a derivative thereof. The first diol residue and second diol residue may be the same as, or different from, each other.

The first diol residue and the second diol residue may each comprise a residue of 1,4-butanediol, 1,2-ethanediol, 1,3-propanediol, or a derivative thereof, specifically, 1,4-butanediol, 1,2-ethanediol, or a derivative thereof, more specifically, 1,4-butanediol or a derivative thereof. For example, when the first diol residue and the second diol residue each comprise 1,4-butanediol, it is possible to appropriately control the glass transition temperature, melt temperature, and melt index of the desired biodegradable polyester resin, and it may be more advantageous for the enhancement in the physical properties such as thermal resistance characteristics and adhesion characteristics.

In addition, in the case where the aromatic dicarboxylic acid and the aliphatic dicarboxylic acid each comprise the above components, they can be more uniformly reacted with the diol components according to the preparation process of the present invention, and the reaction efficiency can be increased; thus, it may be more advantageous for the preparation of the biodegradable polyester resin having the above physical properties.

Specifically, the first diol residue and the second diol residue may each comprise a residue of 1,4-butanediol or a derivative thereof, the aromatic dicarboxylic acid residue may comprise a residue of terephthalic acid or a derivative thereof, and the aliphatic dicarboxylic acid residue may comprise a residue of adipic acid, sebacic acid, suberic acid, or a derivative thereof.

For example, the biodegradable polyester resin may comprise a first repeat unit comprising a residue of 1,4-butanediol or a derivative thereof and a residue of terephthalic acid or a derivative thereof.

Alternatively, the biodegradable polyester resin may comprise a first repeat unit comprising a residue of 1,4-butanediol or a derivative thereof and a residue of dimethyl terephthalate or a derivative thereof.

The biodegradable polyester resin may comprise a second repeat unit comprising a residue of 1,4-butanediol or a derivative thereof and a residue of adipic acid or a derivative thereof.

Alternatively, the biodegradable polyester resin may comprise a second repeat unit comprising a residue of 1,4-butanediol or a derivative thereof and a residue of sebacic acid, suberic acid, or a derivative thereof.

When the first repeat unit and the second repeat unit satisfy the above configurations, it may be more advantageous for providing a biodegradable polyester film having enhanced thermal resistance characteristics and adhesion characteristics.

Meanwhile, in order for the biodegradable polyester resin to have excellent thermal resistance characteristics, along with excellent adhesive strength between the same substrates, as well as excellent adhesive strength with other substrates, and to reduce the reduction rate of adhesive strength after a pressure cooker test (PCT), it is very important to control the number of repeat units that constitute the biodegradable polyester resin.

According to an embodiment of the present invention, the ratio (X/Y) of the number of the first repeat unit (X) to the number of the second repeat unit (Y) may be 0.2 to 1.5. Specifically, the ratio (X/Y) of the number of the first repeat unit (X) to the number of the second repeat unit (Y) may be 0.2 to 1.4, 0.3 to 1.4, 0.4 to 1.3, 0.4 to 1.2, 0.4 to 1.1, 0.5 to 1.5, 0.6 to 1.4, 0.7 to 1.3, 0.8 to 1.2, 0.9 to 1.1, or 0.4 to 1.0.

When the ratio (X/Y) of the number of the first repeat unit (X) to the number of the second repeat unit (Y) satisfies the above range, it is possible to enhance thermal resistance characteristics and adhesion characteristics at the same time. In particular, when a biodegradable polyester film prepared from the biodegradable polyester resin is thermally adhered to one side of various substrates, which is then subjected to a pressure cooker test (PCT), the reduction rate of adhesive strength can be significantly lowered, and the thermal shrinkage rate can be lowered; thus, it may be more advantageous for providing a biodegradable adhesive product with high quality.

Specifically, the number of the first repeat unit may be 100 to 620, 150 to 600, 150 to 550, 150 to 500, 170 to 480, or 171 to 476.

The number of the second repeat unit may be 120 to 800, 150 to 800, 170 to 700, 200 to 600, 200 to 500, 200 to 400, 230 to 600, 230 to 550, 230 to 530, 230 to 500, 230 to 400, 238 to 524, 250 to 550, 280 to 530, or 300 to 500.

When the number of the first repeat unit and the number of the second repeat unit each satisfy the above ranges, it is possible to enhance the thermal resistance characteristics and adhesion characteristics of the biodegradable polyester resin or a biodegradable polyester film prepared using the same at the same time, to lower the reduction rate of adhesive strength after a pressure cooker test (PCT), and to the reduce thermal shrinkage rate.

In particular, when the number of the second repeat unit is controlled to the above range, the glass transition temperature (Tg) of the biodegradable polyester resin can be lowered to -15°C or lower. As a result, the crystallinity of the biodegradable polyester resin can be lowered to achieve semi-crystalline characteristics; thus, the biodegradable polyester resin can secure thermal resistance characteristics while further enhancing the adhesion characteristics with other substrates.

According to an embodiment of the present invention, the number of the first repeat unit may be the same as, or less than, the number of the second repeat unit. In such a case, it may be more advantageous for achieving the effects desired in the present invention.

In particular, as the number of the second repeat unit comprising a second diol residue and an aliphatic dicarboxylic acid residue is increased, the adhesion characteristics such as excellent adhesive strength and low reduction rate of adhesive strength can be further enhanced.

However, if the biodegradable polyester resin comprises the second repeat unit alone, while it does not comprise the first repeat unit, the initial adhesive strength may be enhanced, whereas the reduction rate of adhesive strength after a pressure cooker test (PCT) may be significantly increased, and the thermal shrinkage rate at 50°C may be significantly increased; thus, there may be limitations in using it as a biodegradable adhesive product.

The biodegradable polyester resin according to an embodiment of the present invention has an adhesion index (AI) of 8 or more as represented by the above Equation 1.

The adhesion index (AI) represented by Equation 1 is the ratio of the adhesive strength (AS) of a biodegradable polyester film specimen prepared from the biodegradable polyester resin to the melting point (Tm) of the biodegradable polyester resin. It may be an indicator of the degree of adhesion characteristics of a biodegradable polyester resin, a biodegradable polyester sheet or film, a biodegradable laminate, or a biodegradable adhesive product.

The higher the adhesion index (AI), the higher the adhesion characteristics. In addition, the lower the melting point (Tm) of the biodegradable polyester resin, the higher the adhesion index (AI). The higher the adhesive strength (AS) of a biodegradable polyester film specimen prepared from the biodegradable polyester resin, the higher the adhesion index.

When the adhesion index (AI) having the above characteristics satisfies an appropriate range, it is possible to simultaneously enhance the adhesion characteristics and thermal resistance characteristics of a biodegradable polyester sheet or film, a biodegradable laminate, and a biodegradable adhesive product, prepared from the biodegradable polyester resin.

Specifically, the adhesion index (AI) of the biodegradable polyester resin may be 8 or more, 9 or more, 10 or more, 12 or more, and 30 or less, 25 or less, 22 or less, 20 or less, 19 or less, or 18 or less. The adhesion index (AI) of the biodegradable polyester resin may be, for example, 8 to 30, for example, 8 to 25, for example, 8 to 20, for example, 9 to 18, for example, 10 to 18, or, for example, 12 to 18. When the adhesion index (AI) of the biodegradable polyester resin satisfies the above range, the thermal resistance characteristics and adhesion characteristics of a biodegradable polyester film are appropriate; thus, it is more useful as a biodegradable adhesive product, and it can be used in various fields to exhibit excellent characteristics.

If the adhesion index (AI) of the biodegradable polyester resin is less than 8, the adhesive strength (AS) of a biodegradable polyester film prepared from the biodegradable polyester resin decreases, or the melting point (Tm) of the biodegradable polyester resin is too high, resulting in high crystallinity of the polyester resin. As a result, the adhesive strength of the biodegradable polyester resin or a biodegradable polyester film prepared therefrom may be deteriorated.

The adhesive strength (gf) of a biodegradable polyester film specimen prepared from the biodegradable polyester resin, indicating AS in Equation 1, may be defined as the maximum stress measured when one side of the specimen and one side of a polyethylene terephthalate (PET) film as a substrate are subjected to thermal adhesion with each other at 130°C with a heat gradient of about 40 psi/1 sec and then delaminated at a peeling angle of 180° and a peeling speed of 300 mm/minute using a peel tester.

The adhesive strength (AS) of a biodegradable polyester film prepared from the biodegradable polyester resin may be 1,000 gf or more, for example, 1,000 gf to 3,000 gf, for example, 1,000 gf to 2,800 gf, for example, 1,000 gf to 2,500 gf, for example, 1,000 gf to 2,000 gf, for example, 1,100 gf to 1,800 gf, for example, 1,100 gf to 1,700 gf, for example, 1,100 gf to 1,600 gf, for example, 1,200 gf to 1,800 gf, for example, 1,200 gf to 1,700 gf, for example, 1,200 gf to 1,600 gf, for example, 1,300 gf to 1,800 gf, for example, 1,300 gf to 1,700 gf, or, for example, 1,300 gf to 1,600 gf.

When the adhesive strength (AS) of a biodegradable polyester film specimen prepared from the biodegradable polyester resin satisfies the above range, it is more advantageous for achieving the adhesion index (AI) desired in the present invention, the adhesion of the biodegradable polyester resin with other various substrates is excellent, whereby a biodegradable adhesive product with high quality can be provided, and its utilization can be further enhanced.

According to an embodiment of the present invention, the adhesive strength of AS and the adhesion index (AI) may be measured using a substrate comprising one or more selected from the group consisting of, for example, paper, foamed plastic, a steel substrate, a fluorine film, a polyimide (PI) film, a polypropylene (PP) film, and a polyethylene (PE) film, in addition to the PET film. In such a case, the adhesive strength and adhesion index can also satisfy the above range.

The melting point (Tm) of the biodegradable polyester resin, indicating Tm in Equation 1, is the temperature at which the biodegradable polyester resin changes state from solid to liquid. When the melting point satisfies an appropriate range, the adhesion characteristics such as thermal adhesive strength and the thermal resistance characteristics can be enhanced at the same time.

The melting temperature (Tm) of the biodegradable polyester resin is measured using a differential scanning calorimeter (DSC) while the temperature is elevated from 40°C to 180°C at a rate of 10°C/minute and then lowered to -50°C at a rate of 10°C/minute.

The melting point (Tm) of the biodegradable polyester resin may be 70°C or higher, for example, 70 to 130°C, for example, 70 to 125°C, for example, 80 to 120°C, or, for example, 90 to 120°C.

When the melting point (Tm) of the biodegradable polyester resin satisfies the above range, it is more advantageous for achieving the adhesion index (AI) desired in the present invention and can further enhance the thermal resistance characteristics.

Meanwhile, in the biodegradable polyester resin according to an embodiment of the present invention, the heat processing index (HPI) represented by the following Equation 2 is 18 to 60:

$$[\text{Equation 2}]$$

$$HPI = MI - Tg$$

In Equation 2,

MI is the melt index (g/10 minutes), excluding the unit, of the biodegradable polyester resin measured at a temperature of 190°C under a load of 2.16 kg according to ASTM D1238, and
Tg is the glass transition temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

The heat processing index (HPI) represented by Equation 2 is the difference between the melt index (MI) and the glass transition temperature (Tg) of the biodegradable polyester resin. It may be an indicator of the degree of heat processing characteristics of a biodegradable polyester resin, a biodegradable polyester sheet or film, a biodegradable laminate, or a biodegradable adhesive product.

That is, as the glass transition temperature (Tg) of the biodegradable polyester resin decreases with a negative value, the heat processing index (HPI) of the biodegradable polyester resin may increase. Here, the low glass transition temperature (Tg) of the biodegradable polyester resin lowers the crystallinity of the biodegradable polyester resin, which also lowers the melting point of the biodegradable polyester resin. Thus, it is possible to further enhance the thermal adhesive strength of a biodegradable polyester sheet or film, a biodegradable laminate, or a biodegradable adhesive product, prepared from the biodegradable polyester resin.

Specifically, the heat processing index (HPI) of the biodegradable polyester resin may be, for example, 18 to 58, for example, 25 to 58, for example, 30 to 58, for example, 32 to 58, for example, 32 to 57, for example, 34 to 57, for example, 30 to 50, for example, 30 to 45, for example, 30 to 40, or, for example, 40 to 57. When the heat processing index (HPI) of the biodegradable polyester resin satisfies the above range, the thermal resistance characteristics and the heat processing characteristics of a biodegradable polyester film are excellent, which can reduce the thermal shrinkage rate at high temperatures of about 50°C or higher and the reduction rate of adhesive strength, and further enhance the mechanical properties.

Since the heat processing index (HPI) having the above characteristics is closely related to the melting index (MI) and the glass transition temperature (Tg) of the biodegradable polyester resin, it is possible to further enhance the heat processing characteristics of a biodegradable polyester sheet or film, a biodegradable laminate, and a biodegradable adhesive product, prepared from the biodegradable polyester resin, when their ranges each satisfy an appropriate range.

Specifically, the melt index (MI; g/10 minutes) of the biodegradable polyester resin is measured at a temperature of 190°C under a load of 2.16 kg according to ASTM D1238. It may be 2.0 or more or 2.5 or more, for example, 2.0 to 30.0, for example, 2.5 to 30.0, for example, 2.5 to 25.0, for example, 3.0 to 25.0, for example, 3.0 to 22.0, for example, 5.0 to 22.0, for example, 5.0 to 20.0, for example, 5.0 to 15.0, for example, 5.0 to 10.0, or, for example, 6.0 to 10.0.

When the melt index (MI) of the biodegradable polyester resin satisfies the above range, the heat processing index (HPI) of the biodegradable polyester resin can be effectively achieved. As a result, it may be more advantageous for achieving the effects desired in the present invention.

In addition, the lower the melt index (MI) of the biodegradable polyester resin, the higher the viscosity of the biodegradable polyester resin. When the melt index (MI) of the biodegradable polyester resin satisfies the above range, it is possible to enhance the desired adhesion characteristics and thermal resistance characteristics at the same time according to an embodiment of the present invention.

The glass transition temperature (Tg) of the biodegradable polyester resin is measured using a differential scanning calorimeter (DSC) by heating from 40°C to 180°C at a rate of 10°C/minute and maintaining isothermal for 5 minutes to perform a first removal procedure of thermal history, cooling from 180°C to -50°C at a rate of 10°C/minute and maintaining isothermal for 5 minutes to perform a cooling procedure, and then heating from -50°C to 180°C at a rate of 10°C/minute to obtain the changes in calories in the endothermic and exothermic curves of the biodegradable polyester resin. The first endothermic temperature in the measurement results is the glass transition temperature (Tg).

The glass transition temperature (Tg) of the biodegradable polyester resin may be -15°C or lower, for example, -15°C to -50°C, for example, -20°C to -50°C, for example, - 20°C to -48°C, for example, -25°C to -45°C, or, for example, -26°C to -42°C.

When the glass transition temperature (Tg) of the biodegradable polyester resin satisfies the above range, the heat processing index (HPI) of the biodegradable polyester resin can be effectively achieved. As a result, it may be more advantageous for achieving the effects desired in the present invention.

In addition, the biodegradable polyester resin according to an embodiment of the present invention has a small change in physical properties, for example, the reduction rate of adhesive strength, after a pressure cooker test (PCT) of a biodegradable polyester film specimen prepared therefrom.

For example, the biodegradable polyester resin may have a reduction rate of adhesive strength (AR) of 34% or less as represented by the following Equation 3:

[Equation 3]

$$AR\ (\%) = \frac{(A1 - A2)}{A1} \times 100$$

In Equation 3, A1 is the adhesive strength (gf), excluding the unit, measured as the maximum stress when one side of a biodegradable polyester film specimen prepared from the biodegradable polyester resin and one side of a polyethylene terephthalate (PET) film are subjected to thermal adhesion with each other at 130°C and then delaminated at a peeling angle of 180° and a peeling speed of 300 mm/minute, and

A2 is the adhesive strength (gf), excluding the unit, measured as the maximum stress when one side of a biodegradable polyester film specimen prepared from the biodegradable polyester resin and one side of a polyethylene terephthalate (PET) film are subjected to thermal adhesion with each other at 130°C, which is left at 80°C and a humidity of 100% for 2 hours according to a pressure cooker test (PCT) and then delaminated at a peeling angle of 180° and a peeling speed of 300 mm/minute.

Specifically, the reduction rate of adhesive strength (AR (%)) may be 34% or less, 30% or less, 25% or less, 22% or less, 20% or less, 19% or less, 18% or less, 17% or less, or 15% or less.

The reduction rate of adhesive strength (AR (%)) may be, for example, 2% to 34%, for example, 5% to 25%, for example, 5% to 20%, for example, 5% to 18%, for example, 10% to 20%, or, for example, 10% to 18%.

When the reduction rate of adhesive strength (AR (%)) satisfies the above range, the reduction rate of adhesive strength is low even after a pressure cooker test (PCT), so that a biodegradable adhesive product with excellent quality can be provided.

According to an embodiment of the present invention, the adhesive strength of each of A1 and A2 may be measured using a substrate comprising one or more selected from the group consisting of, for example, paper, foamed plastic, a steel substrate, a fluorine film, a polyimide (PI) film, a polypropylene (PP) film, and a polyethylene (PE) film, in addition to the PET film. In such a case, the reduction rate of adhesive strength can also satisfy the above range.

One of the key features of the biodegradable polyester resin according to an embodiment may lie in that the reduction rate of adhesive strength with other various substrates, as well as the reduction rate of adhesive strength between the same substrates, is low. For example, the biodegradable polyester resin has excellent adhesion characteristics with other substrates comprising at least one selected from the group consisting of paper, a polyethylene terephthalate (PET) film, a polyimide (PI) film, a polypropylene (PP) film, and a polyethylene (PE) film.

A1 refers to the initial adhesive strength before a pressure cooker test (PCT). It may be 1,000 gf or more, for example, 1,000 gf to 3,000 gf, for example, 1,000 gf to 2,800 gf, for example, 1,000 gf to 2,500 gf, for example, 1,000 gf to 2,000 gf, for example, 1,100 gf to 1,800 gf, or, for example, 1,100 gf to 1,600 gf.

A2 refers to the adhesive strength after a pressure cooker test (PCT). It may be, for example, 800 to 2,000 gf, for example, 850 to 1,800 gf, for example, 900 to 1,700 gf, for example, 900 to 1,600 gf, for example, 920 to 1,500 gf, for example, 930 to 1,500 gf, or, for example, 930 to 1,450 gf.

When A1 and A2 each satisfy the above ranges, the reduction rate of adhesive strength (AR (%)) of a biodegradable polyester film specimen prepared from the biodegradable polyester resin can be effectively achieved. As a result, it is more advantageous for achieving the effects desired in the present invention and possible to provide a biodegradable adhesive product with good quality.

Meanwhile, the biodegradable polyester resin may have a thermal shrinkage rate ($TS_{50}$) of 50% or less as represented by the following Equation 4:

[Equation 4]

$$\text{Thermal shrinkage rate } (TS_{50},\ \%) = \frac{L_{25} - L_{50}}{L_{25}} \times 100$$

In Equation 4, $L_{25}$ is the initial length (mm) of a biodegradable polyester film specimen at 25°C prepared from the biodegradable polyester resin, and

$L_{50}$ is the length (mm) of the biodegradable polyester film specimen prepared from the biodegradable polyester resin after it has been left for 5 minutes in a hot air oven at 50°C.

The thermal shrinkage rate ($TS_{50}$) represented by Equation 4 is a value obtained by converting the degree of thermal shrinkage of a biodegradable polyester film specimen at a hot air temperature of 50°C into a percentage. It is a value calculated as a percentage of the change between the initial length of a biodegradable polyester film specimen and the length of the specimen after it has been left in a hot air oven relative to the initial length of the specimen.

The thermal shrinkage rate ($TS_{50}$) may be calculated by cutting a biodegradable polyester film into 150 mm in length and 2 cm in width regardless of the direction to prepare a specimen and then measuring the initial length thereof at room temperature and the length of the biodegradable polyester film specimen after it has been left for 5 minutes in a hot air oven at 50°C.

The thermal shrinkage rate ($TS_{50}$) may be less than 50%, 48% or less, 46% or less, 45% or less, 44% or less, 42% or less, 40% or less, 38% or less, less than 36%, 35% or less, or 30% or less.

When the thermal shrinkage rate ($TS_{50}$) satisfies the above range, the degree of thermal shrinkage is low at a hot air temperature of 50°C or higher, bending or deformation can be minimized, and, at the same time, the physical properties of a biodegradable polyester film can be improved.

Meanwhile, the biodegradable polyester resin may have a loss tangent (tan δ) of greater than 1 as represented by the following Equation 5:

$$[\text{Equation 5}]$$

$$\text{Loss tangent (tan δ)} = \frac{G''}{G'}$$

In Equation 5, G' is the storage modulus of the biodegradable polyester resin at 240°C and a frequency of 5 rad/s in dynamic viscoelasticity measurement, and

G" is the loss modulus of the biodegradable polyester resin at 240°C and a frequency of 5 rad/s in dynamic viscoelasticity measurement.

To determine the loss tangent (tan δ) of the biodegradable polyester resin, the storage modulus and loss modulus of the biodegradable polyester resin are measured using a rheometrics dynamic spectrometer (RDS, TA Instrument, Discovery HR 30), and it is calculated using the above Equation 5.

That is, the loss tangent (tan δ) of the biodegradable polyester resin is a ratio of the loss modulus (G") of the biodegradable polyester resin to the storage modulus (G') of the biodegradable polyester resin. If the value of the loss modulus (G") of the biodegradable polyester resin is greater than the value of the storage modulus (G') of the biodegradable polyester resin, the loss tangent (tan δ) of the biodegradable polyester resin represented by the above Equation 5 may be greater than 1.

Specifically, the loss tangent (tan δ) of the biodegradable polyester resin may be, for example, 1.05 to 1.30, for example, 1.05 to 1.25, for example, 1.10 to 1.25, for example, 1.11 to 1.24, for example, 1.11 to 1.21, or, for example, 1.11 to 1.18.

When the loss tangent (tan δ) of the biodegradable polyester resin satisfies the above range, it is possible to simultaneously enhance the adhesion characteristics and thermal resistance characteristics, as well as mechanical properties, of a biodegradable polyester sheet or film, a biodegradable laminate, or a biodegradable adhesive product, prepared from the biodegradable polyester resin, and to minimize the thermal shrinkage rate and thermal deformation.

The storage modulus (G') of the biodegradable polyester resin may be, for example, 200,000 dyne/cm$^2$ to 400,000 dyne/cm$^2$, for example, 220,000 dyne/cm$^2$ to 400,000 dyne/cm$^2$, for example, 230,000 dyne/cm$^2$ to 400,000 dyne/cm$^2$, for example, 230,000 dyne/cm$^2$ to 380,000 dyne/cm$^2$, 230,000 dyne/cm$^2$ to 360,000 dyne/cm$^2$, or, for example, 230,000 dyne/cm$^2$ to 340,000 dyne/cm$^2$.

The loss modulus (G") of the biodegradable polyester resin may be, for example, 220,000 dyne/cm$^2$ to 450,000 dyne/cm$^2$, for example, 25,000 dyne/cm$^2$ to 430,000 dyne/cm$^2$, for example, 260,000 dyne/cm$^2$ to 420,000 dyne/cm$^2$, for example, 265,000 dyne/cm$^2$ to 420,000 dyne/cm$^2$, 265,000 dyne/cm$^2$ to 410,000 dyne/cm$^2$, 260,000 dyne/cm$^2$ to 400,000 dyne/cm$^2$, or, for example, 260,000 dyne/cm$^2$ to 390,000 dyne/cm$^2$.

When the storage modulus (G') and the loss modulus (G") of the biodegradable polyester resin each satisfy the above range, it is possible to enhance the adhesion characteristics and thermal resistance characteristics, as well as mechanical properties, of a biodegradable polyester sheet or film, a biodegradable laminate, or a biodegradable adhesive product, prepared from the biodegradable polyester resin, and to minimize the thermal shrinkage rate and thermal deformation.

Meanwhile, a biodegradable polyester sheet prepared from the biodegradable polyester resin may have a tensile strength of 30 MPa or more.

The tensile strength may be measured using a universal testing machine (UTM, model name 4206-001) of INSTRON in which a biodegradable polyester sheet specimen is prepared in accordance with ASTM D638 V-type using the biodegradable polyester resin, a test is performed at a tensile speed of 100 mm/minute, and it is measured by the program built in the equipment.

The tensile strength may be, for example, 30 MPa to 50 MPa, for example, 30 MPa to 49 MPa, for example, 30 MPa to 48 MPa, for example, 31 MPa to 48 MPa, for example, 32 MPa to 48 MPa, for example, 33 MPa to 48 MPa, for example, 34 MPa to 48 MPa, for example, 35 MPa to 49 MPa, for example, 35 MPa to 48 MPa, for example, 35 MPa to 47 MPa, for example, 33 MPa to 40 MPa, for example, 33 MPa to 38 MPa, or, for example, 35 MPa to 46 MPa.

If the tensile strength satisfies the above range, it is possible to enhance the productivity, processability, and formability of the biodegradable polyester resin at the same time.

According to an embodiment of the present invention, the biodegradable polyester resin may further comprise at least one nanocellulose selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

When the biodegradable polyester resin further comprises the nanocellulose, it is possible to further enhance the physical properties, such as mechanical strength, and thermal characteristics of the biodegradable polyester resin, a biodegradable polyester sheet or film, a biodegradable laminate, or a biodegradable adhesive product, prepared therefrom.

The biodegradable polyester resin according to an embodiment of the present invention is biodegradable, has excellent thermal resistance characteristics as compared with the biodegradable resins conventionally used, and has excellent adhesion characteristics with other various substrates, as well as between the same substrates. Thus, the biodegradable polyester resin can be variously used as an environmentally friendly biodegradable adhesive product with high quality.

The configuration and physical properties of the biodegradable polyester resin can be efficiently achieved by using the process for preparing a biodegradable polyester resin according to an embodiment of the present invention.

Hereinafter, the process for preparing a biodegradable polyester resin will be described in detail.

**Process for preparing a biodegradable polyester resin**

According to another embodiment of the present invention, there is provided a process for preparing a biodegradable polyester resin, which comprises a first step of mixing a diol component and an aromatic dicarboxylic acid and pretreating it to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and a third step of subjecting the prepolymer to a polycondensation reaction, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number of the first repeat unit (X) to the number of the second repeat unit (Y) is 0.2 to 1.4, and the adhesion index (AI) represented by the above Equation 1 is 8 or more.

According to an embodiment of the present invention, in the process for preparing a biodegradable polyester resin, a diol component and an aromatic dicarboxylic acid are mixed and pretreated to obtain a slurry; the slurry is subjected to an esterification reaction to obtain a prepolymer; and the prepolymer is subjected to a polycondensation reaction to effectively achieve the desired configuration and physical properties of the biodegradable polyester resin according to an embodiment of the present invention.

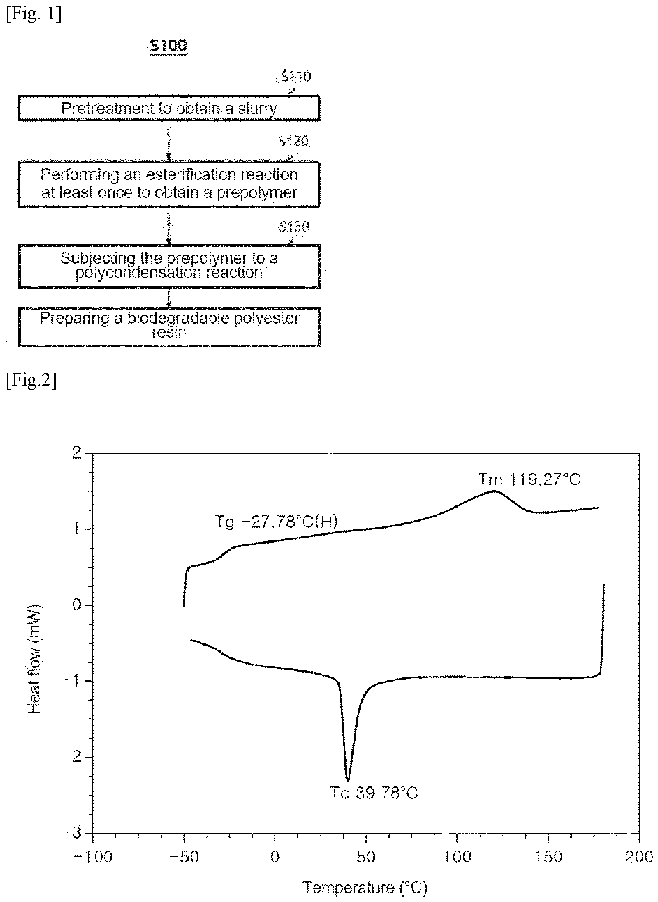

Referring to Fig. 1, the process for preparing a biodegradable polyester resin (S100) comprises a first step (S110) of mixing a diol component and an aromatic dicarboxylic acid and pretreating it to obtain a slurry.

That is, the first step is a pretreatment step before the esterification reaction, in which step a diol component and an aromatic dicarboxylic acid are mixed and formed into a slurry.

As a diol component and an aromatic dicarboxylic acid are mixed and pretreated to form a slurry, the diol component and the aromatic dicarboxylic acid can be uniformly reacted, and it is effective for expediting the esterification reaction, whereby the reaction efficiency can be increased.

In particular, if an aromatic dicarboxylic acid such as terephthalic acid has complete crystallinity and is in a powder form, its solubility in the diol is very low, whereby it may be difficult to carry out a homogeneous reaction. Thus, the pretreatment step of forming a slurry may play a very important role in providing a biodegradable polyester resin and film according to an embodiment of the present invention and enhancing the reaction efficiency.

In addition, in the case where all of a diol component, an aromatic dicarboxylic acid, and an aliphatic dicarboxylic acid are mixed and subjected to an esterification reaction, without the step of mixing and pretreating the diol component and the aromatic dicarboxylic acid, the reaction of the diol component and the aliphatic dicarboxylic acid may be preferentially carried out. Thus, it may be difficult to achieve a biodegradable polyester resin that satisfies the ratio (X/Y) of the number of the first repeat unit and the second repeat unit as desired in the present invention and to achieve the effects of adhesion characteristics and thermal resistance characteristics aimed in an embodiment of the present invention.

According to an embodiment of the present invention, in the case where the aromatic dicarboxylic acid is terephthalic acid, terephthalic acid is a white crystal that has perfect crystallinity and sublimes at around 300°C under normal pressure without a melting point, and it has very low solubility in the diol, making it difficult to carry out a homogeneous reaction. In the case where the pretreatment step is performed before the esterification reaction, a uniform reaction can be induced by increasing the surface area thereof for reacting with the diol in the solid matrix of terephthalic acid.

In addition, according to an embodiment of the present invention, in the case where the aromatic dicarboxylic acid is dimethyl terephthalate, dimethyl terephthalate may be made into a molten state at about 142°C to 170°C by the pretreatment step and reacted with the diol. Thus, it is possible to carry out the esterification reaction more quickly and efficiently.

Meanwhile, in the pretreatment procedure of the first step, the configuration and physical properties of the biodegradable polyester resin may vary depending on the particle size, particle size distribution, pretreatment reaction conditions, and the like of the aromatic dicarboxylic acid.

For example, the aromatic dicarboxylic acid may comprise terephthalic acid, and the terephthalic acid may have an average particle diameter (D50) of 10 $\mu$m to 400 $\mu$m in a particle size distribution (PSD) measured by a particle size analyzer Microtrac S3500 and a standard deviation of the average particle diameter (D50) of 100 or less.

The average particle diameter (D50) of terephthalic acid may be, for example, 10 $\mu$m to 400 $\mu$m, for example, 30 $\mu$m to 350 $\mu$m, for example, 50 $\mu$m to 300 $\mu$m, for example, 100 $\mu$m to 250 $\mu$m, for example, 100 $\mu$m to 200 $\mu$m, or, for example, 100 $\mu$m to 150 $\mu$m. When the average particle diameter (D50) of terephthalic acid satisfies the above range, it may be more advantageous in terms of solubility enhancement in diols and reaction rate.

If the average particle diameter (D50) of terephthalic acid is less than the above range, the average particle diameter is too small, so that primary particles may be undesirably converted to aggregated secondary particles. If the average particle diameter (D50) of terephthalic acid exceeds the above range, the average particle diameter is too large, so that the solubility in diols is reduced, thereby lowering the reaction rate, and it may be difficult to achieve a homogenization reaction.

In addition, the standard deviation of the average particle diameter (D50) of terephthalic acid may be 100 or less, for example, 5 to 90, for example, 10 to 50, or 20 to 30. When the standard deviation of the average particle diameter (D50) satisfies the above range, it may be more advantageous in terms of solubility enhancement in diols and reaction rate.

Further, when the average particle diameter (D50) and the standard deviation thereof each satisfy the above ranges, the reaction time can be shortened by 1.5 times or more, so that it may be preferable in terms of reaction efficiency.

When the aromatic dicarboxylic acid is dimethyl terephthalate, it may be used in a molten state, or, when measured in a particle state, it may have an average particle diameter (D50) and a standard deviation thereof similar to those of terephthalic acid.

In the pretreatment procedure of the first step, the diol and the aromatic dicarboxylic acid may be mixed and fed to a slurry agitator (tank).

According to an embodiment of the present invention, in the pretreatment process of the first step, the agitating force until the slurry is formed is very important; thus, the number and shape of agitating blades of the agitator and the conditions for forming the slurry are very important.

It may be more advantageous for producing an efficient agitating effect that the slurry agitator is, for example, an anchor type at the bottom, has a height to the agitator of 20 mm or more, and has two or more rotor blades.

For example, the slurry agitator may have a height to the agitator of 20 mm or more. That is, the reactor and the bottom of the agitator are almost contiguous to each other. In such a case, a slurry without precipitation can be obtained. If the shape of the agitator and the number of the rotor blades do not satisfy the above conditions, when the diol and the aromatic dicarboxylic acid are initially mixed, the aromatic dicarboxylic acid may settle to the bottom, thereby causing phase separation.

The pretreatment process of the first step may comprise mixing the diol component and the aromatic dicarboxylic acid and agitating the mixture at 60°C to 100°C and 50 rpm to 200 rpm for 10 minutes or longer or 30 minutes or longer, for example, 10 minutes to 200 minutes. If the pretreatment process satisfies the above temperature, speed, and agitation time, a homogeneous slurry can be obtained without phase separation, which is advantageous in terms of reaction efficiency, and the physical properties of the biodegradable polyester resin desired in the present invention can be efficiently obtained.

The diol component may comprise 1,4-butanediol, 1,2-ethanediol, 1,3-propanediol, or a derivative thereof.

Specifically, the diol component may comprise 1,4-butanediol, 1,2-ethanediol, 1,3-propanediol, or a derivative thereof in an amount of 95% by mole or more, 98% by mole or more, 99% by mole or more, or 100% by mole, based on the total number of moles of the diol component. As the diol component comprises 1,4-butanediol, 1,2-ethanediol, 1,3-propanediol, or a derivative thereof in the above amount, it is possible to further enhance the physical properties of the biodegradable polyester resin, and a biodegradable polyester sheet or film, a biodegradable laminate, or a biodegradable adhesive product, prepared from the same.

The diol component may be added all at once or dividedly. For example, the diol component may be added dividedly at the time of mixing with an aromatic dicarboxylic acid and mixing with an aliphatic dicarboxylic acid.

The aromatic dicarboxylic acid may comprise one or more selected from the group consisting of terephthalic acid, dimethyl terephthalate, and a derivative thereof. Specifically, the aromatic dicarboxylic acid may be terephthalic acid or dimethyl terephthalate.

In addition, the aliphatic dicarboxylic acid component may be used in an amount of 20% by mole to 52% by mole, 25% by mole to 52% by mole, 25% by mole to 50% by mole, 28% by mole to 50% by mole, 30% by mole to 50% by mole, 30% by mole to 48% by mole, or 30% by mole to 46% by mole, based on the total number of moles of the dicarboxylic acid component.

When the molar ratio of the aromatic dicarboxylic acid is controlled to the above range, it is more advantageous for producing the effects of the present invention and to further enhance the adhesion characteristics and thermal resistance characteristics of a biodegradable polyester sheet or film, a biodegradable laminate, or a biodegradable adhesive product, prepared using the biodegradable polyester resin.

Referring back to Fig. 1, the process for preparing a biodegradable polyester resin comprises a second step (S120) of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer.

In the esterification reaction of the second step, the reaction time may be shortened by using the slurry obtained in the first step. For example, the reaction time may be shortened by 1.5 times or more by using the slurry obtained in the first step.

The esterification reaction of the second step may be carried out at least once.

According to an embodiment of the present invention, in the esterification reaction, an aliphatic dicarboxylic acid, or a diol and an aliphatic dicarboxylic acid, may be added to the slurry to carry out the esterification reaction once.

The esterification reaction may be carried out at 250°C or lower for 0.5 hour to 5 hours. Specifically, the esterification reaction may be carried out at atmospheric pressure or a reduced pressure at 180°C to 250°C, 185°C to 240°C, or 200°C to 240°C, until water as a by-product theoretically reaches 95%. For example, the esterification reaction may be carried out for 0.5 hour to 4.5 hours, 0.5 hour to 3.5 hours, or 1 hour to 3 hours, but it is not limited thereto.

The prepolymer may have a number average molecular weight of 500 to 10,000 g/mole. For example, the number average molecular weight of the prepolymer may be 500 to 8,500 g/mole, 500 to 8,000 g/mole, 500 to 7,000 g/mole, 500 to 5,000 g/mole, or 500 to 2,000 g/mole. As the number average molecular weight of the prepolymer satisfies the above range, it is possible to efficiently increase the molecular weight of the polymer in the polycondensation reaction.

According to another embodiment of the present invention, the esterification reaction may be carried out two or more times as a step of subjecting the slurry to a first esterification reaction; and a step of adding an aliphatic dicarboxylic acid, or a diol and an aliphatic dicarboxylic acid, to the product of the first esterification reaction and carrying out a second esterification reaction.

In the case where the esterification reaction is carried out two or more times, it is possible to enhance the reaction stability and reaction uniformity as compared with the case where the esterification reaction is carried out once, and the desired ratio of the number of the first repeat unit to the number of the second repeat unit can be adjusted, leading to an advantage in that the effect according to an embodiment of the present invention can be efficiently produced.

The first esterification reaction and the second esterification reaction may each be carried out at 250°C or lower for 0.5 hour to 5 hours. Specifically, the first esterification reaction and the second esterification reaction may each be carried out at atmospheric pressure and 180°C to 250°C, 185°C to 240°C, or 200°C to 240°C, until water as a by-product theoretically reaches 95%. For example, the first esterification reaction and the second esterification reaction may each be carried out for 0.5 hour to 4.5 hours, 0.5 hour to 3.5 hours, or 1 hour to 3 hours, but it is not limited thereto.

The prepolymer may have a number average molecular weight of 500 to 10,000 g/mole. For example, the number average molecular weight of the prepolymer may be 500 g/mole to 8,500 g/mole, 500 g/mole to 7,000 g/mole, 1,000 g/mole to 6,000 g/mole, or 2,500 g/mole to 5,500 g/mole. As the number average molecular weight of the prepolymer satisfies the above range, it is possible to efficiently increase the molecular weight of the polymer in the polycondensation reaction, thereby further enhancing the strength characteristics.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

The aliphatic dicarboxylic acid component may comprise adipic acid, succinic acid, suberic acid, sebasic acid, or a derivative thereof. Specifically, the aliphatic dicarboxylic acid component may comprise adipic acid, sebasic acid, or suberic acid.

In addition, the aliphatic dicarboxylic acid component may be used in an amount of 48% by mole to 80% by mole, 48% by mole to 75% by mole, 50% by mole to 75% by mole, 50% by mole to 72% by mole, 50% by mole to 70% by mole, 52% by mole to 70% by mole, or 54% by mole to 70% by mole, based on the total number of moles of the dicarboxylic acid component.

When the content of the aliphatic dicarboxylic acid is controlled to the above range, it is more advantageous for producing the effects of the present invention and to further enhance the adhesion characteristics and thermal resistance characteristics of a biodegradable polyester sheet or film, a biodegradable laminate, or a biodegradable adhesive product, prepared using the biodegradable polyester resin.

In particular, since the aliphatic dicarboxylic acid component is composed of a linear chain, the glass transition temperature (Tg) of the biodegradable polyester resin may vary depending on its content, and it may have an impact on the physical properties such as adhesion characteristics and thermal resistance characteristics of the biodegradable polyester resin.

Specifically, as the content of the aliphatic dicarboxylic acid is increased, the glass transition temperature (Tg) of the biodegradable polyester resin can be lowered. As a result, it is possible to further enhance the adhesion characteristics, such as excellent adhesive strength and low reduction rate of adhesive strength, and thermal resistance characteristics.

In the second step, nanocellulose may be further added at the time of the esterification reaction, for example, if the first and second esterification reactions are carried out, at the time of the first esterification reaction, at the time of the second esterification reaction, or both.

Specifically, in the case where the esterification reaction is carried out once, nanocellulose may be further added at the time of the esterification reaction, for example, at the time when an aliphatic dicarboxylic acid is, or a diol and an aliphatic dicarboxylic acid are, added.

In addition, in the case where the esterification reaction is carried out two or more times, nanocellulose may be added at the time of the first esterification reaction, at the time of the second esterification reaction, or both. For example, nanocellulose may be added at the time of the second esterification reaction, that is, at the time when an aliphatic dicarboxylic acid is, or a diol and an aliphatic dicarboxylic acid are, added, or at the initial stage of the esterification reaction. In such a case, the nanocellulose may be efficiently dispersed. In particular, it is preferable in terms of physical properties such as strength, modulus, and hardness of the biodegradable polyester resin to add nanocellulose, and it is possible to enhance the thermal resistance characteristics and mechanical properties of a biodegradable polyester film as well.

The nanocellulose may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

The nanocellulose may have a diameter of 1 nm to 200 nm. For example, the diameter of the nanocellulose may be 1 nm to 150 nm, 1 nm to 120 nm, 1 nm to 100 nm, 1 nm to 95 nm, 5 nm to 90 nm, 10 nm to 80 nm, 1 nm to 50 nm, 5 nm to 45 nm, 10 nm to 60 nm, 1 nm to 10 nm, 10 nm to 30 nm, or 15 nm to 50 nm.

In addition, the nanocellulose may have a length of 5 nm to 10 $\mu$m. For example, the length of the nanocellulose may be 5 nm to 1 $\mu$m, 10 nm to 150 nm, 20 nm to 300 nm, 200 nm to 500 nm, 100 nm to 10 $\mu$m, 500 nm to 5 $\mu$m, 300 nm to 1 $\mu$m, or 1 $\mu$m to 10 $\mu$m.

As the diameter and length of the nanocellulose each satisfy the above ranges, it is possible to further enhance the physical properties of the biodegradable polyester resin, or a biodegradable polyester sheet or film, a biodegradable laminate, or a biodegradable adhesive product, prepared from the same.

In addition, the content of the nanocellulose may be, for example, 0.3% by weight or less, for example, 0.25% by weight or less, for example, 0.2% by weight or less, 0.18% by weight or less, 0.15% by weight or less, 0.1% by weight or less, 0.09% by weight or less, 0.08% by weight or less, 0.07% by weight or less, or 0.06% by weight or less, and, for example, 0.01% by weight or more, 0.015% by weight or more, 0.02% by weight or more, 0.025% by weight or more, or 0.03% by weight or more, based on the total weight of the diol, aromatic dicarboxylic acid, and aliphatic dicarboxylic acid. As the content of the nanocellulose satisfies the above range, the thermal resistance characteristics and mechanical properties can be further enhanced.

In the second step, the esterification reaction may be initiated after a titanium-based catalyst or a germanium-based catalyst is added.

Specifically, in the case where the esterification reaction is carried out once, a mixture containing a diol component, an aromatic dicarboxylic acid, and an aliphatic dicarboxylic acid may be prepared, and the esterification reaction may be carried out after the catalyst is added.

In addition, in the case where the esterification reaction is carried out two or more times, the esterification reaction may be initiated after the catalyst is added to the reactor each of the esterification reactions. Specifically, once the slurry has been charged to a reactor and the catalyst has been added thereto, a first esterification reaction may be carried out, and/or once an aliphatic dicarboxylic acid or a diol component and an aliphatic dicarboxylic acid have been added to the reaction product obtained by carrying out a first esterification reaction of the slurry and the catalyst has been added thereto, a second esterification reaction may be carried out.

Specifically, the biodegradable polyester resin may comprise at least one selected from the group consisting of titanium isopropoxide, antimony trioxide, dibutyltin oxide, tetrapropyl titanate, tetrabutyl titanate, tetraisopropyl titanate, antimony acetate, calcium acetate, and magnesium acetate; or a germanium-based catalyst selected from the group consisting of germanium oxide, germanium methoxide, germanium ethoxide, tetramethyl germanium, tetraethyl germanium, and germanium sulfide.

In addition, the content of the catalyst may be 100 ppm to 1,000 ppm based on the total weight of the diol, aromatic dicarboxylic acid, and aliphatic dicarboxylic acid. For example, the titanium-based catalyst or germanium-based catalyst may be employed in an amount of 100 ppm to 800 ppm, 150 ppm to 700 ppm, 200 ppm to 600 ppm, or 250 ppm to 550 ppm. As the content of the catalyst satisfies the above range, the physical properties can be further enhanced.

A phosphorus-based stabilizer may be further added during the esterification reaction in the second step, at the end of the esterification reaction, or both.

Specifically, in the case where the esterification reaction is carried out once, a phosphorus-based stabilizer may be further added during the esterification reaction, at the end of the esterification reaction, or both.

In addition, in the case where the esterification reaction is carried out two or more times, a phosphorus-based stabilizer may be further added during the first esterification reaction, during the second esterification reaction, or both, or at the end of the first esterification reaction and at the end of the second esterification reaction.

Specifically, the biodegradable polyester resin may further comprise at least one phosphorus-based stabilizer selected from the group consisting of amine-based high-temperature thermal stabilizers such as tetraethylenepentaamine, phosphoric acid, phosphorous acid, polyphosphoric acid, trimethylphosphate, triethylphosphate, triethylphosphonoacetate, trimethylphosphine, and triphenylphosphine.

The content of the phosphorus-based stabilizer may be 3,000 ppm or less based on the total weight of the diol, aromatic dicarboxylic acid, and aliphatic dicarboxylic acid. Specifically, the content of the phosphorus-based stabilizer may be, for example, 10 ppm to 3,000 ppm, 20 ppm to 2,000 ppm, 20 ppm to 1,500 ppm, or 20 ppm to 1,000 ppm, based on the total weight of the diol, aromatic dicarboxylic acid, and aliphatic dicarboxylic acid. As the content of the phosphorus-based stabilizer satisfies the above range, it is possible to suppress the degradation of the polymer due to high temperatures during the reaction process, thereby reducing the end groups of the polymer and improving the color.

At least one selected from the group consisting of an additive such as silica, potassium, titanium dioxide, and magnesium and a color-correcting agent such as cobalt acetate may be further added at the end of the esterification reaction of the second step. That is, the additive and/or color-correcting agent may be added after the completion of the esterification reaction and then stabilized, and the polycondensation reaction may then be carried out.

Referring back to Fig. 1, the process for preparing a biodegradable polyester resin (S100) comprises a third step (S 130) of subjecting the prepolymer to a polycondensation reaction.

The polycondensation reaction may be carried out at 180°C to 280°C and 1.0 Torr or lower for 1 hour to 5 hours. For example, the polycondensation reaction may be carried out at 190°C to 270°C, 210°C to 260°C, or 230°C to 255°C, at 0.9 Torr or less, 0.7 Torr or less, 0.2 Torr to 1.0 Torr, 0.3 Torr to 0.9 Torr, or 0.4 Torr to 0.6 Torr, for 1.5 hours to 5 hours, 2 hours to 5 hours, or 2.5 hours to 4.5 hours.

In addition, a titanium-based catalyst or a germanium-based catalyst may be further added to the prepolymer before the polycondensation reaction. In addition, one or more selected from the group consisting of an additive such as silica, potassium, and magnesium; a stabilizer such as trimethyl phosphate, triphenyl phosphate, trimethyl phosphine, phosphoric acid, phosphorous acid, and an amine-based stabilizer such as tetraethylenepentaamine; and a polymerization catalyst such as antimony trioxide, and tetrabutyl titanate may be further added to the prepolymer before the polycondensation reaction.

The polymer may have a number average molecular weight of 25,000 g/mole or more. For example, the number average molecular weight of the polymer may be 28,000 g/mole or more, 29,000 g/mole or more, 25,000 g/mole to 70,000 g/mole, 25,000 g/mole to 60,000 g/mole, 30,000 g/mole to 55,000 g/mole, or 40,000 g/mole to 55,000 g/mole. As the number average molecular weight of the polymer satisfies the above range, the adhesion characteristics and thermal resistance characteristics, as well as mechanical properties, can be further enhanced.

Thereafter, pellets may be prepared from the polymer.

Specifically, the polymer may be cooled to 15°C or lower, 10°C or lower, or 6°C or lower, and the cooled polymer may then be cut to prepare pellets.

The cutting step may be carried out using a pellet cutter without limitations as long as it is commonly used in the art, and the pellets may have various shapes. Examples of the pellet cutting method may include an underwater cutting method or a strand cutting method.

The process for preparing a biodegradable polyester resin can provide a biodegradable polyester resin having the above characteristics, and a biodegradable polyester sheet or film, a biodegradable laminate, and a biodegradable adhesive product, each comprising the same, in a simple manufacturing process and an economical and efficient way.

**Biodegradable polyester sheet**

Meanwhile, in an embodiment of the present invention, a biodegradable polyester sheet may be prepared using the biodegradable polyester resin.

For example, the biodegradable polyester sheet may be prepared using the biodegradable polyester resin or polyester resin pellets.

Specifically, the polyester resin prepared above is put in, for example, a stainless steel (SUS) mold and maintained at about 150 to 300°C under a pressure of 5 to 20 MPa for 1 minute to 30 minutes using a hot press. It is then taken out and immediately cooled at 18°C to 25°C in water for about 10 seconds to 5 minutes to obtain a biodegradable polyester sheet.

**Biodegradable polyester film and process for preparing the same**

In an embodiment of the present invention, there is provided a biodegradable polyester film, which comprises a biodegradable polyester resin, wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number of the first repeat unit (X) to the number of the second repeat unit (Y) is 0.2 to 1.4, and the adhesion index (AI) represented by the above Equation 1 is 8 or more.

The biodegradable polyester film may have a thickness of 5 $\mu$m to 200 $\mu$m. For example, the thickness of the biodegradable polyester film may be 5 $\mu$m to 180 $\mu$m, 5 $\mu$m to 160 $\mu$m, 10 $\mu$m to 150 $\mu$m, 15 $\mu$m to 130 $\mu$m, 20 $\mu$m to 100 $\mu$m, 25 $\mu$m to 80 $\mu$m, or 25 $\mu$m to 60 $\mu$m.

The physical properties such as adhesive strength, reduction rate of adhesive strength, and thermal shrinkage rate of the biodegradable polyester film may satisfy the ranges described above concerning the biodegradable polyester resin.

In addition, a biodegradable polyester film comprising the biodegradable polyester resin may have a biodegradability of 50% or more as measured by the amount of carbon dioxide generated according to KS M3100-1 and a water degradability reduction rate represented by the following Equation 6 of 50% or more:

$$[\text{Equation 6}]$$

$$\text{Water degradability reduction rate (\%)} = \frac{(Mn_A - Mn_B)}{Mn_A} \times 100$$

In Equation 6, $Mn_A$ and $Mn_B$ are each a number average molecular weight of a biodegradable polyester sheet prepared from the biodegradable polyester resin as measured using gel permeation chromatography (GPC) in which the biodegradable polyester sheet is immersed in water and subjected to water degradation acceleration at 80°C in a hot air oven.

$Mn_A$ is the initial number average molecular weight of the biodegradable polyester sheet, and $Mn_B$ is the number average molecular weight of the biodegradable polyester sheet after 3 months of the water degradation acceleration.

Here, the water degradation acceleration refers to immersing a biodegradable polyester sheet in water and subjecting it to hydrolysis at a temperature of 80°C.

The water degradability reduction rate may be calculated by measuring the initial number average molecular weight of a biodegradable polyester sheet and the number average molecular weight thereof after 3 months of the water degradation acceleration. That is, the water degradability reduction rate of the biodegradable polyester sheet is represented as a ratio in percentage of the difference between the initial number average molecular weight of the biodegradable polyester sheet and the number average molecular weight of the biodegradable polyester sheet after three months to the initial number average molecular weight as represented by the above Equation 6 measured using gel permeation chromatography (GPC).

The water degradability reduction rate of the biodegradable polyester sheet may be 50% or more, 52% or more, 54% or more, 55% or more, 58% or more, 60% or more, 65% or more, 70% or more, 75% or more, 80% or more, 85% or more, or 90% or more.

As the water degradability reduction rate of the biodegradable polyester sheet satisfies the above range, the ultimate biodegradation may be possible while adhesion characteristics and thermal resistance characteristics are secured. That is, the biodegradable polyester film according to an embodiment of the present invention has a great advantage in that it can be used as a biodegradable adhesive product by virtue of its excellent adhesion characteristics and thermal resistance characteristics and that it is biodegradable, making it environmentally friendly.

For example, when the biodegradable polyester resin according to an embodiment of the present invention is used as an adhesive product such as a heat adhesive film or an adhesive formed on a film of a biodegradable packaging material, both the biodegradable packaging material and the biodegradable polyester film (biodegradable heat adhesive film) are biodegradable, which is highly desirable in terms of environmental friendliness.

The initial number average molecular weight ($Mn_A$) of the biodegradable polyester sheet may be 50,000 g/mole to 70,000 g/mole, for example, 50,000 g/mole to 68,000 g/mole or 50,000 g/mole to 65,000 g/mole.

The number average molecular weight ($Mn_B$) of the biodegradable polyester sheet measured after the biodegradable polyester sheet has been immersed in water at 80°C and is subjected to water degradation acceleration for 3 months may be 3,000 g/mole to 40,000 g/mole, for example, 4,000 g/mole to 35,000 g/mole or 5,000 g/mole to 30,000 g/mole.

If the initial number average molecular weight ($Mn_A$) of the biodegradable polyester sheet and the number average molecular weight ($Mn_B$) of the biodegradable polyester sheet after water degradation acceleration for three months each satisfy the above ranges, the water degradability reduction rate of the biodegradable polyester sheet may satisfy the above range, whereby biodegradation may be possible under seawater biodegradation or humid conditions.

Meanwhile, the biodegradable polyester film may be prepared using the biodegradable polyester resin or biodegradable polyester resin pellets.

Specifically, the process for preparing a biodegradable polyester film may comprise a first step of mixing a diol component and an aromatic dicarboxylic acid and pretreating it to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; a third step of subjecting the prepolymer to a polycondensation reaction to obtain a polymer; a fourth step of preparing pellets from the polymer; and a fifth step of drying and melt-extruding the pellets.

Details on the first step to the fourth step are as described above.

In the fifth step, the drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of pellets satisfy the above ranges, it is possible to further enhance the quality of a biodegradable polyester film thus produced.

In the fifth step, the melt-extrusion may be carried out at a temperature of 270°C or lower. For example, the melt-extrusion may be carried out at a temperature of 265°C or lower, 260°C or lower, 255°C or lower, 150°C to 270°C, 150°C to 255°C, or 150°C to 240°C. The melt-extrusion may be carried out by a blown film process.

According to an embodiment of the present invention, inorganic substances and other additives may not be added during the preparation of the biodegradable polyester film. Specifically, as the biodegradable polyester film satisfies the specific configuration and the specific ranges of physical properties of the biodegradable polyester resin, it is possible to achieve excellent adhesion characteristics and thermal resistance characteristics even if inorganic substances and other additives are not added.

**Biodegradable** laminate and process for preparing the same

In an embodiment of the present invention, there is provided a biodegradable laminate, which comprises the biodegradable polyester resin.

The biodegradable laminate according to an embodiment of the present invention comprises a substrate layer; and a biodegradable polyester resin layer formed on the substrate layer, wherein the polyester resin layer comprises a polyester resin, the polyester resin comprises a first repeat unit comprising a first diol residue and an aromatic dicarboxylic acid residue and a second repeat unit comprising a second diol residue and an aliphatic dicarboxylic acid residue, in which the ratio (X/Y) of the number of the first repeat unit (X) to the number of the second repeat unit (Y) is 0.2 to 1.4, and when one side of the biodegradable polyester resin layer having a width of 15 mm and a length of 150 mm and one side of paper are subjected to thermal adhesion with each other at 130°C and then delaminated at a peeling angle of 180° and a peeling speed of 300 mm/minute, the adhesive strength as the maximum stress is 1,000 gf or more.

In the biodegradable laminate, the physical properties such as adhesive strength, reduction rate of adhesive strength, adhesion index, heat processing index, thermal shrinkage rate, and tensile strength of the biodegradable polyester resin layer may be achieved to the same extent as the physical properties of the biodegradable polyester film.

In addition, in the biodegradable laminate, the adhesive strength of the biodegradable polyester resin layer may have an effect that the adhesive strength is increased by about 15% or more relative to the case when one side of the biodegradable polyester film and one side of a polyethylene terephthalate (PET) film are subjected to thermal adhesion.

For example, in the biodegradable laminate, the adhesive strength when the biodegradable polyester resin layer and one side of paper are subjected to thermal adhesion may be 1,000 gf to 4,000 gf, 1,200 gf to 3,000 gf, 1,300 gf to 2,500 gf, or 1,500 gf to 2,500 gf.

When the adhesive strength (AS) of the biodegradable polyester resin layer satisfies the above range, the adhesion characteristics with paper are excellent, while it is biodegradable; thus, the biodegradable laminate can be used as an environmentally friendly biodegradable adhesive product.

According to an embodiment of the present invention, the adhesive strength may be measured using a substrate comprising one or more selected from the group consisting of, for example, a polyethylene terephthalate (PET) film, foamed plastic, a steel substrate, a fluorine film, a polyimide (PI) film, a polypropylene (PP) film, and a polyethylene (PE) film, in addition to paper.

Meanwhile, the biodegradable polyester laminate may be prepared using the biodegradable polyester resin or biodegradable polyester resin pellets.

Specifically, the process for preparing a biodegradable polyester laminate may comprise a first step of mixing a diol component and an aromatic dicarboxylic acid and pretreating it to obtain a slurry; a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; a third step of subjecting the prepolymer to a polycondensation reaction to obtain a polymer; a fourth step of preparing pellets from the polymer; and a fifth step of melt-extruding the pellets onto a substrate layer to form a biodegradable polyester resin layer.

Details on the first step to the fourth step are as described above.

A step of drying the pellets may be further carried out between the fourth step and the fifth step.

The drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of pellets satisfy the above ranges, it is possible to further enhance the quality of a biodegradable polyester laminate thus produced.

The fifth step may comprise melt-extruding the pellets, or dried pellets, onto a substrate layer to form a biodegradable polyester resin layer.

The substrate layer may comprise at least one selected from the group consisting of paper, a polyethylene terephthalate (PET) film, foamed plastic, a steel substrate, a polyimide (PI) film, a polypropylene (PP) film, and a polyethylene (PE) film.

In addition, the melt-extrusion may be carried out at a temperature of 270°C or lower. For example, the melt-extrusion may be carried out at a temperature of 265°C or lower, 260°C or lower, 255°C or lower, 150°C to 270°C, 150°C to 255°C, 150°C to 250°C, or 150°C to 240°C.

**Biodegradable adhesive product**

In an embodiment of the present invention, there is provided a biodegradable adhesive product, which comprises the biodegradable polyester resin.

The biodegradable polyester resin according to an embodiment of the present invention has excellent thermal resistance characteristics as compared with the biodegradable polyester resins conventionally used, while it has excellent adhesive strength between the same substrates as well as excellent adhesive strength with other various substrates such as paper, foamed plastic, a steel substrate, a fluorine film, a polyethylene terephthalate (PET) film, a polyimide (PI) film, a polypropylene (PP) film, and a polyethylene (PE) film, and it has a significantly low reduction rate of adhesive strength after a pressure cooker test (PCT), resulting in excellent adhesion characteristics. Thus, it can be advantageously used as a biodegradable adhesive product in various fields. In particular, since the biodegradable adhesive product is biodegradable, when it is used as, for example, a biodegradable adhesive product in an environmentally friendly packaging material, it has a great advantage in terms of environmental friendliness.

The adhesive product may include various products used for adhesion. For example, it may include an adhesive and/or an adhesive film. In addition, the adhesive may comprise a heat adhesive, and the adhesive film may comprise a heat adhesive film.

Specifically, according to an embodiment of the present invention, the biodegradable polyester resin may be used as a biodegradable adhesive.

When the biodegradable polyester resin is used as a biodegradable adhesive, the biodegradable polyester resin may be melt-extruded onto a substrate and flow thereon to be extrusion-coated on one side of the substrate.

For example, if the substrate is paper, when the paper is unwound from a winder and is released, the biodegradable polyester resin may be moved with a screw in a device with a T-die gap of about 2 cm or less, and the polyester resin may be melt-extruded and flow to be extrusion-coated on one side of the paper. The extrusion-coating may be carried out at a temperature of, for example, 150°C to 250°C.

When the biodegradable polyester resin is used as a biodegradable adhesive and is extrusion-coated on a substrate such as paper, there may be an effect that the adhesive strength increases by about 15% or more relative to the case when it is used as a heat adhesive film.

According to another embodiment of the present invention, the biodegradable polyester resin may be used as an adhesive film, such as a biodegradable heat adhesive film.

For example, when the biodegradable polyester resin is used as a heat adhesive film, the polyester resin is prepared into a biodegradable polyester film or a stretched biodegradable polyester film using a blown film extruder, and the polyester blown film or stretched biodegradable polyester film is interposed between substrates (between films), and heat adhesion lamination may be carried out by applying pressure and heat. The temperature during the lamination may be, for example, 100°C to 180°C.

The adhesive product such as an adhesive or a heat adhesive film can be used in various ways. It is excellent in adhesion characteristics and thermal resistance characteristics, as well as biodegradable, which has great advantages in terms of environmental friendliness.

## Embodiments for Carrying Out the Invention

Hereinafter, the present invention will be described in detail with reference to examples. The following examples are only illustrative of the present invention, and the scope of the present invention is not limited thereto.

### <Example>

### Example 1

### Preparation of a biodegradable polyester resin

### Step 1: Pretreatment to obtain a slurry

As shown in Table 1, 1,4-butanediol (1,4-BDO) and terephthalic acid (TPA) were mixed at a molar ratio (1,4-BDO:TPA) of 1:1, which was then charged to a slurry tank (provided with an anchor type at the bottom, a height to the agitator of 30 mm, and three rotor blades) in a state without a catalyst. Here, terephthalic acid (TPA) had a D50 of about 100 $\mu$m and a standard deviation (SD) of the D50 of about 30.

Then, the mixture was pretreated by stirring at about 70°C and about 150 rpm for about 30 minutes to obtain a slurry without phase separation.

### Step 2: Preparation of a prepolymer

The slurry obtained in step 1 was fed to a reactor through a supply line, and about 200 ppm of tetrabutyl titanate (Tyzor TnBT, Dupont) as a titanium-based catalyst was added thereto. A first esterification reaction was then carried out at about 220°C and atmospheric pressure for about 1.5 hours until 95% of water as a by-product was discharged.

Added to the reaction product were about 54% by mole of 1,4-butanediol (1,4-BDO) based on the total number of moles of diol components, about 54% by mole of sebacic acid based on the total number of moles of dicarboxylic acid components, and about 150 ppm of tetrabutyl titanate (Tyzor TnBT, Dupont) as a titanium-based catalyst based on the total weight of the diol, aromatic dicarboxylic acid, and aliphatic dicarboxylic acid. A second esterification reaction was then carried out at about 200°C and atmospheric pressure for about 1 hour until 95% of water as a by-product was discharged, thereby obtaining a prepolymer having a number average molecular weight of 4,000 g/mole.

### Step 3: Polycondensation reaction

About 150 ppm of tetrabutyl titanate (Tyzor TnBT, Dupont) as a titanium-based catalyst and about 600 ppm of a triethyl phosphate stabilizer based on the total weight of the diol, aromatic dicarboxylic acid, and aliphatic dicarboxylic acid were added to the prepolymer obtained in step 2, which was stabilized for about 10 minutes. Thereafter, the reaction mixture was heated to about 240°C, and a polycondensation reaction was carried out at about 0.5 Torr for about 2 hours to prepare a polymer having a number average molecular weight of about 30,000 g/mole.

It was cooled to 5°C and cut with a pellet cutter to obtain biodegradable polyester resin pellets.

### Preparation of a biodegradable polyester sheet

Two Teflon sheets were prepared. A stainless steel (SUS) frame (with an area of 12 cm $\times$ 12 cm) was placed on one Teflon sheet, and about 7 g of the polyester resin pellets prepared above was put in the stainless steel (SUS) frame (with an area of 12 cm $\times$ 12 cm), which was covered with another Teflon sheet. It was placed in the center of a hot press (manufacturer: WithLab, model name: WL 1600SA) having an area of about 25 cm × 25 cm. It was maintained at about 210°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 μm.

**Preparation of a biodegradable polyester film**

The biodegradable polyester resin pellets were dried at about 70°C for about 5 hours and then melt-extruded at about 160°C using a blown film extruder (Multilayer Blown Line, manufacturer: Shinkwang Engineering) to prepare a biodegradable polyester film having a thickness of about 15 μm.

**Preparation of a biodegradable laminate**

The biodegradable polyester resin pellets were dried at about 70°C for about 5 hours and then melt-extruded using an extruder (SM Platek, twin-screw T-die extruder) at about 180°C directly onto a substrate in a hot melt state to be extrusion-coated thereon to prepare a biodegradable laminate.

**Example 2**

A biodegradable polyester resin, a biodegradable polyester sheet or film, and a biodegradable laminate were prepared in the same manner as in Example 1, except that adipic acid was used as an aliphatic dicarboxylic acid, TPA having a different D50 and a different standard deviation (SD) was used, the amounts of the raw materials were changed, and about 0.1% by weight, based on the total weight of the diol, aromatic dicarboxylic acid, and aliphatic dicarboxylic acid, of cellulose nanocrystal (CNC) (particle diameter of 190 nm) treated with ultrasound for 1 minute was further added when 1,4-butanediol (1,4-BDO) and adipic acid (AA) were added, as shown in Table 1 below.

**Example 3**

A biodegradable polyester resin, a biodegradable polyester sheet or film, and a biodegradable laminate were prepared in the same manner as in Example 1, except that dimethyl terephthalate (DMT) was used as an aromatic dicarboxylic acid, adipic acid was used as an aliphatic dicarboxylic acid, and the amounts of the raw materials were changed, as shown in Table 1 below.

**Example 4**

**Step 1: Pretreatment to obtain a slurry**

About 48% by mole of 1,4-butanediol (1,4-BDO) based on the total number of moles of diol components and about 48% by mole of terephthalic acid (TPA) based on the total number of moles of dicarboxylic acid components were mixed, which was then charged to a slurry tank (provided with an anchor type at the bottom, a height to the agitator of 15 mm, and two rotor blades) in a state without a catalyst. The terephthalic acid (TPA) had a D50 of about 200 μm and a standard deviation (SD) of the D50 of about 30.
Then, the mixture was pretreated by stirring at about 80°C and about 180 rpm for about 15 minutes to obtain a slurry without phase separation.

**Step 2: Preparation of a prepolymer**

The slurry obtained in step 1, about 52% by mole of 1,4-butanediol (1,4-BDO) based on the total number of moles of diol components, and about 52% by mole of adipic acid (AA) based on the total number of moles of dicarboxylic acid components were fed to a reactor through a supply line. About 300 ppm of tetrabutyl titanate (Tyzor TnBT, Dupont) as a titanium-based catalyst based on the total weight of the diol, aromatic dicarboxylic acid, and aliphatic dicarboxylic acid was added thereto. An esterification reaction was then carried out at about 220°C and atmospheric pressure for about 3 hours until 95% of water as a by-product was discharged, thereby obtaining a prepolymer having a number average molecular weight of about 1,500 g/mole.

**Step 3: Polycondensation reaction**

About 150 ppm of tetrabutyl titanate (Tyzor TnBT, Dupont) as a titanium-based catalyst based on the total weight of the diol, aromatic dicarboxylic acid, and aliphatic dicarboxylic acid was added to the prepolymer obtained in step 2, which was heated to about 250°C, and a polycondensation reaction was carried out at about 0.5 Torr for about 4 hours to prepare a polymer having a number average molecular weight of about 30,000 g/mole. It was cooled to 5°C and cut with a pellet cutter to obtain biodegradable polyester resin pellets.

A biodegradable polyester resin, a biodegradable polyester sheet or film, and a biodegradable laminate were prepared in the same manner as in Example 1 using the biodegradable polyester resin pellets.

**Example 5**

A biodegradable polyester resin, a biodegradable polyester sheet or film, and a biodegradable laminate were prepared in the same manner as in Example 4, except that suberic acid was used as an aliphatic dicarboxylic acid, TPA having a different D50 and a different standard deviation (SD) was used, the amounts of the raw materials were changed, and about 0.06% by weight, based on the total weight of the diol, aromatic dicarboxylic acid, and aliphatic dicarboxylic acid, of cellulose nanocrystal (CNC) (particle diameter of 190 nm) treated with ultrasound for 1 minute was further added when 1,4-butanediol (1,4-BDO) and suberic acid were added, as shown in Table 1 below.

**Example 6**

A biodegradable polyester resin, a biodegradable polyester sheet or film, and a biodegradable laminate were prepared in the same manner as in Example 4, except that TPA having a different D50 and a different standard deviation (SD) was used, and the amounts of the raw materials were changed, as shown in Table 1 below.

**Comparative Example 1**

A biodegradable polyester resin, a biodegradable polyester sheet or film, and a biodegradable laminate were prepared in the same manner as in Example 4, except that step 1 (pretreatment step) of Example 4 was not carried out, the amounts of terephthalic acid (TPA) and adipic acid (AA) were changed, and TPA having a different D50 and a different standard deviation (SD) was used, as shown in Table 1 below.

**Comparative Example 2**

A biodegradable polyester resin, a biodegradable polyester sheet or film, and a biodegradable laminate were prepared in the same manner as in Comparative Example 1, except that an aromatic dicarboxylic acid was not used, as shown in Table 1 below.

**Comparative Example 3**

A biodegradable polyester resin, a biodegradable polyester sheet or film, and a biodegradable laminate were prepared in the same manner as in Comparative Example 1, except that sebacic acid was used as an aliphatic dicarboxylic acid, TPA having a different D50 and a different standard deviation (SD) was used, and the amounts of the raw materials were changed, as shown in Table 1 below.

**Comparative Example 4**

A biodegradable polyester resin, a biodegradable polyester sheet or film, and a biodegradable laminate were prepared in the same manner as in Example 2, except that step 1 (pretreatment step) of Example 1 was not carried out, the amounts of terephthalic acid (TPA) and adipic acid (AA) were changed, and TPA having a different D50 and a different standard deviation (SD) was used, as shown in Table 1 below.

[Table 1]

| | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| 1,4-BDO (% by mole) | | 46+54 | 30+70 | 50+50 | 48+52 | 40+60 | 45+55 | 60+40 | 100 | 70+30 | 90+10 |
| DMT or TPA (% by mole) | | TPA 46 | TPA 30 | DMT 50 | TPA 48 | TPA 40 | TPA 45 | TPA 60 | 0 | TPA 70 | TPA 90 |
| Aliphatic dicarboxylic acid (% by mole) | | Sebacic acid 54 | Adipic acid 70 | Adipic acid 50 | Adipic acid 52 | Suberic acid 60 | Adipic acid 55 | Adipic acid 40 | Adipic acid 100 | Sebacic acid 30 | Adipic acid 10 |
| CNC (% by weight) | | - | 0.1 | - | - | 0.06 | - | - | - | - | - |
| Resin | Number of first repeat unit (X) | 200 | 171 | 276 | 276 | 280 | 476 | 629 | - | 333 | 942 |
| | Number of second repeat unit (Y) | 238 | 400 | 276 | 295 | 290 | 524 | 419 | 1047 | 74 | 105 |
| | X/Y | 0.84 | 0.43 | 1.00 | 0.94 | 0.97 | 0.91 | 1.50 | - | 4.5 | 8.9 |
| Process | Pretreatment | O | O | O | O | O | O | X | X | X | X |
| | First esterification reaction | O | O | O | O | O | O | O | O | O | O |
| | Second esterification reaction | O | O | O | X | X | X | X | X | X | O |
| | D50 of DMT or TPA (μm) | 100 | 100 | 200 | 200 | 150 | 150 | 420 | - | 150 | 500 |
| | SD of DMT or TPA | 30 | 20 | 20 | 30 | 50 | 50 | 50 | - | 50 | 110 |

EP 4 421 105 A1

21

**Evaluation Example**

**Evaluation Example 1: Average particle diameter (D50) and standard deviation**

**<Average particle diameter (D50) of an aromatic dicarboxylic acid and standard deviation thereof>**

The aromatic dicarboxylic acid (TPA or DMT) was measured for the average particle diameter (D50) in a particle size distribution (PSD) by a particle size analyzer Microtrac S3500 (Microtrac Inc.) and a standard deviation thereof under the following conditions:
Environment for use

- Temperature: 10 to 35°C, humidity: 90% RH, non-condensing maximum
- D50 as an average particle size distribution for each section and SD were measured.

The standard deviation refers to the square root of variance and may be calculated using a software.

**< Particle diameter of nanocellulose >**

The nanocellulose was subjected to measurement of particle size and particle size deviation through dynamic light scattering (DLS) at a temperature of 25°C and a measurement angle of 175° using Zetasizer Nano ZS (manufacturer: Marven). Here, the value of the peak derived through the polydispersity index (PdI) in the confidence interval of 0.5 was taken as the particle size.

**Evaluation Example 2: Glass transition temperature (Tg) and melting point (Tm)**

In a differential scanning calorimeter, the temperature was elevated from 40°C to 180°C at a rate of 10°C/minute, isothermal was maintained for 5 minutes to first remove thermal history, the temperature was then lowered from 180°C to -50°C at a rate of 10°C/minute, and isothermal was maintained for 5 minutes as a cooling procedure. Then, the changes in calories in the endothermic and exothermic curves of the biodegradable polyester resin were measured while the temperature was raised at a rate of 10°C/minute from -50°C to 180°C.
The first endothermic temperature was a glass transition temperature (Tg), the exothermic temperature measured after the Tg was a crystallization temperature (Tc), and the endothermic temperature measured after the Tc was a melting point (Tm) in the measurement result.
As can be seen from Fig. 2, the polyester resin of Example 4 had a Tg of -27.78°C, a Tc of 39.78°C, and a Tm of 119.27°C.

**Evaluation Example 3: Melt index (MI)**

Each biodegradable polyester resin was measured for a melt index (g/10 minute) at a temperature of 190°C and a load of 2.16 kg according to ASTM D1238.

**Evaluation Example 4: Adhesive strength and reduction rate of adhesive strength**

**(1) Adhesive strength**

Each biodegradable polyester film specimen prepared from the biodegradable polyester resins prepared in the Examples and Comparative Examples was cut to about 15 mm in width and about 150 mm in length. One side of the specimen and one side of a polyethylene terephthalate (PET) film having a thickness of about 188 $\mu$m (SKC) as a substrate were subjected to thermal adhesion with each other at 130°C with a heat gradient of about 40 psi/1 sec and then delaminated at a peeling angle of 180° and a peeling speed of 300 mm/minute using a peel tester to measure the maximum stress.
Meanwhile, each biodegradable laminate prepared in the Examples and Comparative Examples was measured for the adhesive strength of the biodegradable polyester resin layer.
The adhesive strength of the biodegradable polyester resin layer was measured as the maximum stress when one side of the biodegradable polyester resin layer having a width of 15 mm and a length of 150 mm and one side of paper were subjected to thermal adhesion with each other at 130°C and then delaminated at a peeling angle of 180° and a peeling speed of 300 mm/minute.

**(2) Reduction rate of adhesive strength**

The initial adhesive strength (A1) and the adhesive strength (A2) after a pressure cooker test (PCT), respectively, were each measured using the above method. Then, the reduction rate of adhesive strength was calculated using the following Equation 3.

[Equation 3]

$$AR\ (\%) = \frac{(A1 - A2)}{A1} \times 100$$

In Equation 3, A1 is the adhesive strength (gf) measured as the maximum stress when one side of a biodegradable polyester film specimen prepared from the biodegradable polyester resin and one side of a polyethylene terephthalate (PET) film having a thickness of about 188 $\mu$m (SKC) were subjected to thermal adhesion with each other at 130°C and then delaminated at a peeling angle of 180° and a peeling speed of 300 mm/minute, and
A2 is the adhesive strength (gf) measured as the maximum stress when one side of a biodegradable polyester film specimen prepared from the biodegradable polyester resin and one side of a polyethylene terephthalate (PET) film were subjected to thermal adhesion with each other at 130°C, which was left at 80°C and a humidity of 100% for 2 hours according to a pressure cooker test (PCT), and then delaminated at a peeling angle of 180° and a peeling speed of 300 mm/minute.

**Evaluation Example 5: Adhesion index (AI)**

Using the results of the adhesive strength (AS) of the biodegradable polyester film specimen and the melting point (Tm) of the biodegradable polyester resin, the adhesion index (AI) represented by the following Equation 1 was calculated:

[Equation 1]

$$\text{Adhesion index (AI)} = \frac{AS}{Tm}$$

In Equation 1, AS is the adhesive strength (gf), excluding the unit, measured as the maximum stress when one side of a biodegradable polyester film specimen having a width of 15 mm and a length of 150 mm prepared from the biodegradable polyester resin and one side of a polyethylene terephthalate (PET) film are subjected to thermal adhesion with each other at 130°C and then delaminated at a peeling angle of 180° and a peeling speed of 300 mm/minute, and Tm is the melting temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

**Evaluation Example 6: Heat processing index (HPI)**

The results of the melt index (MI) and glass transition temperature (Tg) of the biodegradable polyester resin were used to calculate the heat processing index (HPI) represented by the following Equation 2:

[Equation 2]

$$HPI = MI - Tg$$

In Equation 2, MI is the melt index (g/10 minutes), excluding the unit, of the biodegradable polyester resin measured at a temperature of 190°C under a load of 2.16 kg according to ASTM D1238, and
Tg is the glass transition temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

**Evaluation Example 7: Thermal shrinkage rate (TS$_{50}$)**

The biodegradable polyester films prepared in the Examples and Comparative Examples were each cut into 150 mm in length and 2 cm in width regardless of the direction to prepare a specimen. The initial length thereof at room temperature and the length of the biodegradable polyester film specimen after it had been left for 5 minutes in a hot air oven at 50°C were measured to calculate a thermal shrinkage rate using the following Equation 4.

[Equation 4]

$$\text{Thermal shrinkage rate (TS}_{50}, \%) = \frac{L_{25} - L_{50}}{L_{25}} \times 100$$

In Equation 4, $L_{25}$ is the initial length of a biodegradable polyester film specimen at 25°C prepared from the biodegradable polyester resin, and $L_{50}$ is the length of the biodegradable polyester film specimen prepared from the biodegradable polyester resin after it has been left for 5 minutes in a hot air oven at 50°C.

**Evaluation Example 8: Storage modulus, loss modulus, and loss tangent (tan δ)**

The biodegradable polyester resins prepared in the Examples or Comparative Examples were each measured for the storage modulus and loss modulus using a rheometrics dynamic spectrometer (RDS; TA Instrument, Discovery HR 30), a dynamic viscoelasticity tester.
Specifically, the rotational rheometer was set to a flow test mode. About 1 g of a polyester resin sample was used, and the temperature was elevated at a rate of 5°C/minute from room temperature (about 23 °C), and the viscoelasticity was measured when it reached about 240°C.
In addition, the loss tangent (tan δ) represented by the following Equation 5 was calculated using the values of the storage modulus and loss modulus:

[Equation 5]

$$\text{Loss tangent (tan δ)} = \frac{G''}{G'}$$

In Equation 5, G' is the storage modulus of the biodegradable polyester resin at 240°C and a frequency of 5 rad/s in dynamic viscoelasticity measurement, and G" is the loss modulus of the biodegradable polyester resin at 240°C and a frequency of 5 rad/s in dynamic viscoelasticity measurement.

**Evaluation Example 9: Tensile strength**

The biodegradable polyester sheets prepared in the Examples or Comparative Examples were each cut to prepare a specimen in accordance with ASTM D638 V-type. The tensile strength (kgf/mm$^2$ = 9.8 MPa) was measured using INSTRON's universal testing machine (UTM, model name 4206-001) at a tensile speed of 100 mm/minute and calculated by the program built in the equipment.

[Table 2]

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Tg (°C) | -42 | -34 | -26 | -27.78 | -38 | -29 | -10 | -35 | -12 | 10 |
| Tm (°C) | 90 | 100 | 119 | 119.27 | 98 | 110 | 123 | 없음 | 130 | 139 |
| Melt index (MI) (g/10 min.) | 9 | 10 | 6 | 5 | 7 | 2 | 8 | 3 | 5 | 4 |
| Adhesive strength (gf) of biodegradable polyester resin layer when coated on paper | 2,150 | 1,930 | 1,650 | 1,590 | 1,580 | 1,600 | 910 | 970 | 720 | 410 |
| Adhesive strength (AS, gf) of biodegradable polyester film on PET | 1,600 | 1,550 | 1,440 | 1,200 | 1,130 | 1,150 | 900 | 1,200 | 700 | 400 |
| A1 (initial adhesive strength, gf) | 1,600 | 1,550 | 1,440 | 1,200 | 1,130 | 1,150 | 900 | 1,200 | 700 | 400 |
| A2 (adhesive strength after PCT, gf) | 1,440 | 1,318 | 1,181 | 972 | 938 | 931 | 585 | 540 | 385 | 180 |
| Reduction rate of adhesive strength (AR, %) | 10 | 15 | 18 | 19 | 17 | 19 | 35 | 55 | 45 | 55 |
| $L_{25}$ (mm) | 150 | 150 | 150 | 150 | 150 | 150 | 150 | 150 | 150 | 150 |
| $L_{50}$ (mm) | 97.5 | 93.0 | 112.5 | 93 | 82.5 | 90 | 67.5 | 30 | 97.5 | 105 |
| Thermal shrinkage rate ($TS_{50}$, %) | 35 | 38 | 25 | 38 | 45 | 40 | 55 | 80 | 35 | 30 |
| AI (AS/Tm) | 17.8 | 15.5 | 12.1 | 10.2 | 11.5 | 10.4 | 7.3 | - | 5.4 | 2.9 |
| HPI (MI - Tg ) | 51 | 44 | 32 | 32.78 | 45 | 31 | 18 | 38 | 17 | -6 |
| G' ($dyne/cm^2$) | 244237 | 239000 | 245585 | 224500 | 253057 | 352100 | 359200 | 302100 | 318400 | 342400 |
| G" ($dyne/cm^2$) | 288200 | 297200 | 272600 | 266300 | 306200 | 391200 | 357500 | 398210 | 304520 | 342100 |
| Tan $\delta$ (G"/G') | 1.18 | 1.24 | 1.11 | 1.18 | 1.21 | 1.11 | 0.99 | 1.32 | 0.96 | 0.99 |
| Tensile strength (MPa) | 33 | 38 | 37 | 33 | 38 | 40 | 28 | 20 | 25 | 29 |

As can be seen from Table 2 above, the biodegradable polyester resins of the Examples, which satisfied both the ratio (X/Y) of the number of the first repeat unit to the number of the second repeat unit and the adhesion index (AI) in the specific ranges, were overall excellent in adhesion characteristics and thermal resistance characteristics. Specifically, the biodegradable polyester resins of Examples 1 to 6 had an adhesion index (AI) of about 10.2 or more, which was significantly enhanced as compared with the biodegradable polyester resins of Comparative Examples 1 to 4, which had an adhesion index (AI) of 2.9 to 7.3. Not only was the adhesive strength enhanced, but the reduction rate of adhesive strength was also significantly reduced.

In addition, the biodegradable polyester resins of Examples 1 to 6 satisfied appropriate levels of Tg, Tm, and melt index, and the heat processing index (HPI) using it also satisfied the appropriate range, thereby significantly enhancing the heat processing characteristics.

Meanwhile, it is confirmed that the ratio of the number of the first repeat unit comprising a first diol residue and an aromatic dicarboxylic acid residue to the number of the second repeat unit comprising a second diol residue and an aliphatic dicarboxylic acid residue has an impact on the physical properties of the biodegradable polyester resin.

Specifically, in the biodegradable polyester resins of Comparative Examples 1, 3, and 4, in which the ratio of the number of the first repeat unit comprising a first diol residue and an aromatic dicarboxylic acid residue to the number of the second repeat unit comprising a second diol residue and an aliphatic dicarboxylic acid residue was 1.5 or more, had an excessively low adhesive strength of 400 to 900 gf, and the reduction rate of adhesive strength was increased to about 35% to 55%, along with increased thermal shrinkage rates.

In addition, in the biodegradable polyester resin of Comparative Example 2 prepared without an aromatic dicarboxylic acid, the adhesive strength appeared to have enhanced to 1,200 gf, whereas the reduction rate of adhesive strength was excessively increased to 55%, and the thermal shrinkage rate was significantly increased to 80%.

In addition, it is confirmed that the addition of nanocellulose has an impact on the physical properties of the biodegradable polyester resin.

Specifically, in the biodegradable polyester resins of Examples 2 and 5, in which nanocellulose was added, the reduction rate of adhesive strength was decreased, and physical properties such as thermal resistance characteristics and tensile strength were enhanced.

Meanwhile, it is confirmed that the process conditions of a biodegradable polyester resin have an impact on the physical properties of the biodegradable polyester resin.

Specifically, in the biodegradable polyester resins of Examples 1 to 3 prepared through the first and second esterification reactions, the adhesive strength and thermal resistance characteristics were overall enhanced, and the thermal shrinkage rate and reduction rate of adhesive strength were decreased, as compared with the biodegradable polyester resins of Examples 4 to 6 prepared through the first esterification reaction alone.

In addition, in the biodegradable polyester resin of Comparative Example 4 prepared through the first and second esterification reactions without slurry pretreatment, the adhesive strength and thermal resistance characteristics were significantly reduced, and the thermal shrinkage rate and reduction rate of adhesive strength were increased., as compared with the biodegradable polyester resins of the Examples in which the slurry pretreatment had been carried out.

Further, when the biodegradable polyester resins of Examples 1 to 6 were each used as a biodegradable adhesive and extrusion-coated on paper, there was produced an effect that the adhesive strength increased by about 15% or more relative to the case when it was used as a heat adhesive film. The adhesive strength was significantly increased as compared with the case where the polyester resins of Comparative Examples 1 to 4 were each used.

From the above results, the biodegradable polyester resin according to the embodiment of the present invention has excellent adhesion characteristics and thermal resistance characteristics, as well as excellent mechanical properties. Therefore, it can be used as a biodegradable adhesive product.

**Claims**

1. A biodegradable polyester resin, which comprises a first repeat unit comprising a first diol residue and an aromatic dicarboxylic acid residue, and a second repeat unit comprising a second diol residue and an aliphatic dicarboxylic acid residue, wherein the ratio (X/Y) of the number of the first repeat unit (X) to the number of the second repeat unit (Y) is 0.2 to 1.4, and the adhesion index (AI) represented by the following Equation 1 is 8 or more:

[Equation 1]

$$\text{Adhesion index (AI)} = \frac{AS}{Tm}$$

in Equation 1, AS is the adhesive strength (gf), excluding the unit, measured as the maximum stress when one side of a biodegradable polyester film specimen having a width of 15 mm and a length of 150 mm prepared from the biodegradable polyester resin, and one side of a polyethylene terephthalate (PET) film are subjected to thermal adhesion with each other at 130°C and then delaminated at a peeling angle of 180° and a peeling speed of 300 mm/minute, and

Tm is the melting temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

2. The biodegradable polyester resin of claim 1, wherein the biodegradable polyester resin has a heat processing index (HPI) of 18 to 60 as represented by the following Equation 2:

[Equation 2]

$$HPI = MI - Tg$$

in Equation 2, MI is the melt index (g/10 minutes), excluding the unit, of the biodegradable polyester resin measured at a temperature of 190°C under a load of 2.16 kg according to ASTM D1238, and

Tg is the glass transition temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

3. The biodegradable polyester resin of claim 1, wherein the biodegradable polyester resin has a reduction rate of adhesive strength (AR) of 34% or less as represented by the following Equation 3:

[Equation 3]

$$AR\ (\%) = \frac{(A1 - A2)}{A1} \times 100$$

in Equation 3, A1 is the adhesive strength (gf), excluding the unit, measured as the maximum stress when one side of a biodegradable polyester film specimen prepared from the biodegradable polyester resin and one side of a polyethylene terephthalate (PET) film are subjected to thermal adhesion with each other at 130°C and then delaminated at a peeling angle of 180° and a peeling speed of 300 mm/minute, and

A2 is the adhesive strength (gf), excluding the unit, as the maximum stress measured when one side of a biodegradable polyester film specimen prepared from the biodegradable polyester resin and one side of a polyethylene terephthalate (PET) film are subjected to thermal adhesion with each other at 130°C, which is left at 80°C and a humidity of 100% for 2 hours according to a pressure cooker test (PCT) and then delaminated at a peeling angle of 180° and a peeling speed of 300 mm/minute.

4. The biodegradable polyester resin of claim 1, wherein the biodegradable polyester resin has a thermal shrinkage rate (TS$_{50}$) of 50% or less as represented by the following Equation 4:

[Equation 4]

$$\text{Thermal shrinkage rate (TS}_{50}, \%) = \frac{L_{25} - L_{50}}{L_{25}} \times 100$$

in Equation 4, L$_{25}$ is the initial length (mm) of a biodegradable polyester film specimen at 25°C prepared from the biodegradable polyester resin, and

L$_{50}$ is the length (mm) of the biodegradable polyester film specimen prepared from the biodegradable polyester resin after it has been left for 5 minutes in a hot air oven at 50°C.

5. The biodegradable polyester resin of claim 2, wherein AS is 1,000 gf or more, Tm is 70°C or higher, Tg is -15°C or lower, and MI is 2.0 (g/10 minutes) or more.

6. The biodegradable polyester resin of claim 1, wherein the biodegradable polyester resin has a loss tangent (tan δ) of greater than 1 as represented by the following Equation 5:

$$\text{[Equation 5]}$$

$$\text{Loss tangent } (\tan \delta) = \frac{G''}{G'}$$

in Equation 5, G' is the storage modulus of the biodegradable polyester resin at 240°C and a frequency of 5 rad/s in dynamic viscoelasticity measurement, and

G" is the loss modulus of the biodegradable polyester resin at 240°C and a frequency of 5 rad/s in dynamic viscoelasticity measurement.

7. The biodegradable polyester resin of claim 1, wherein the first diol residue and the second diol residue each comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, and the aliphatic dicarboxylic acid residue comprises a residue of adipic acid, succinic acid, suberic acid, sebacic acid, or a derivative thereof.

8. The biodegradable polyester resin of claim 1, wherein the biodegradable polyester resin further comprises at least one nanocellulose selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

9. A process for preparing a biodegradable polyester resin, which comprises:

a first step of mixing a diol component and an aromatic dicarboxylic acid and pretreating it to obtain a slurry;
a second step of subjecting a mixture comprising the slurry and an aliphatic dicarboxylic acid, or a mixture of a reaction product obtained by esterification of the slurry and an aliphatic dicarboxylic acid, to an esterification reaction at least once to obtain a prepolymer; and
a third step of subjecting the prepolymer to a polycondensation reaction,
wherein the biodegradable polyester resin comprises a first repeat unit comprising a first diol residue and an aromatic dicarboxylic acid residue and a second repeat unit comprising a second diol residue and an aliphatic dicarboxylic acid residue, the ratio (X/Y) of the number of the first repeat unit (X) to the number of the second repeat unit (Y) is 0.2 to 1.4, and the adhesion index (AI) represented by the above Equation 1 is 8 or more:

$$\text{[Equation 1]}$$

$$\text{Adhesion index } (AI) = \frac{AS}{Tm}$$

in Equation 1, AS is the adhesive strength (gf), excluding the unit, measured as the maximum stress when one side of a biodegradable polyester film specimen having a width of 15 mm and a length of 150 mm prepared from the biodegradable polyester resin and one side of a polyethylene terephthalate (PET) film are subjected to thermal adhesion with each other at 130°C and then delaminated at a peeling angle of 180° and a peeling speed of 300 mm/minute, and

Tm is the melting temperature (°C), excluding the unit, of the biodegradable polyester resin measured using a differential scanning calorimeter (DSC) while the temperature is elevated from 40°C to 180°C at a rate of 10°C/minute and then lowered to -50°C at a rate of 10°C/minute.

10. The process for preparing a biodegradable polyester resin of claim 9, wherein the pretreatment of the first step comprises mixing the diol component and the aromatic dicarboxylic acid and agitating the mixture at 60°C to 100°C and 50 rpm to 200 rpm for 10 minutes or longer.

11. A biodegradable polyester film, which comprises the biodegradable polyester resin of claim 1.

12. A biodegradable laminate, which comprises a substrate layer and a biodegradable polyester resin layer formed on the substrate layer, wherein the polyester resin layer comprises a polyester resin, the polyester resin comprises a first repeat unit comprising a first diol residue and an aromatic dicarboxylic acid residue and a second repeat unit comprising a second diol residue and an aliphatic dicarboxylic acid residue, in which the ratio (X/Y) of the number of the first repeat unit (X) to the number of the second repeat unit (Y) is 0.2 to 1.4, and when one side of the biodegradable polyester resin layer having a width of 15 mm and a length of 150 mm and one side of paper are subjected to thermal adhesion with each other at 130°C and then delaminated at a peeling angle of 180° and a peeling speed of 300 mm/minute, the adhesive strength as the maximum stress is 1,000 gf or more.

[Fig. 1]

**S100**

```
                                              S110
┌──────────────────────────────────────────┐
│        Pretreatment to obtain a slurry     │
└──────────────────────────────────────────┘
                     │
                     ▼                        S120
┌──────────────────────────────────────────┐
│      Performing an esterification reaction │
│      at least once to obtain a prepolymer  │
└──────────────────────────────────────────┘
                     │
                     ▼                        S130
┌──────────────────────────────────────────┐
│         Subjecting the prepolymer to a     │
│          polycondensation reaction         │
└──────────────────────────────────────────┘
                     │
                     ▼
┌──────────────────────────────────────────┐
│     Preparing a biodegradable polyester    │
│                    resin                   │
└──────────────────────────────────────────┘
```

[Fig.2]

## INTERNATIONAL SEARCH REPORT

International application No.

**PCT/KR2022/014770**

### A. CLASSIFICATION OF SUBJECT MATTER

**C08G 63/16**(2006.01)i; **C08G 63/181**(2006.01)i; **C08G 63/78**(2006.01)i; **C08L 67/02**(2006.01)i; **C08L 1/02**(2006.01)i; **B32B 27/10**(2006.01)i; **B32B 27/36**(2006.01)i

According to International Patent Classification (IPC) or to both national classification and IPC

### B. FIELDS SEARCHED

Minimum documentation searched (classification system followed by classification symbols)

C08G 63/16(2006.01); C08G 63/672(2006.01); C08G 63/78(2006.01); C08L 67/02(2006.01); C08L 67/03(2006.01); C09J 167/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성(biodegradable), 폴리에스테르(polyester), 부탄디올(butanediol), 디메틸 테레프탈레이트(dimethyl terephthalate), 아디프산(adipic acid), 나노 셀룰로오스(nano cellulose), 접착(adhesion)

### C. DOCUMENTS CONSIDERED TO BE RELEVANT

| Category* | Citation of document, with indication, where appropriate, of the relevant passages | Relevant to claim No. |
|---|---|---|
| X | KR 10-2001-0055721 A (IRE CHEMICAL LTD.) 04 July 2001 (2001-07-04)<br>See paragraphs [0013], [0032], [0034] and [0093]; example 1; claim 1; and table 1. | 1-7,9-12 |
| Y | | 8 |
| Y | KR 10-2021-0057244 A (SAMYANG CORPORATION) 21 May 2021 (2021-05-21)<br>See paragraph [0095]; and claims 1 and 2. | 8 |
| A | KR 10-2019-0057578 A (SK CHEMICALS CO., LTD.) 29 May 2019 (2019-05-29)<br>See entire document. | 1-12 |
| A | KR 10-1637994 B1 (SUYUN CO., LTD.) 08 July 2016 (2016-07-08)<br>See entire document. | 1-12 |
| A | US 2015-0183927 A1 (SAMSUNG FINE CHEMICALS CO., LTD.) 02 July 2015 (2015-07-02)<br>See entire document. | 1-12 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2023** | **16 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/014770**

| Patent document cited in search report | | | Publication date (day/month/year) | Patent family member(s) | | | Publication date (day/month/year) |
|---|---|---|---|---|---|---|---|
| KR | 10-2001-0055721 | A | 04 July 2001 | EP | 1106640 | A2 | 13 June 2001 |
| | | | | EP | 1106640 | A3 | 16 January 2002 |
| | | | | JP | 2001-187818 | A | 10 July 2001 |
| | | | | KR | 10-0366484 | B1 | 14 January 2003 |
| | | | | US | 2001-0007899 | A1 | 12 July 2001 |
| | | | | US | 6713595 | B2 | 30 March 2004 |
| KR | 10-2021-0057244 | A | 21 May 2021 | None | | | |
| KR | 10-2019-0057578 | A | 29 May 2019 | CN | 109293908 | A | 01 February 2019 |
| | | | | EP | 3486268 | A1 | 22 May 2019 |
| | | | | EP | 3486268 | B1 | 07 September 2022 |
| | | | | JP | 2019-094488 | A | 20 June 2019 |
| | | | | KR | 10-2356309 | B1 | 28 January 2022 |
| | | | | TW | 201925262 | A | 01 July 2019 |
| | | | | US | 10815403 | B2 | 27 October 2020 |
| | | | | US | 2019-0153276 | A1 | 23 May 2019 |
| KR | 10-1637994 | B1 | 08 July 2016 | None | | | |
| US | 2015-0183927 | A1 | 02 July 2015 | CN | 104583271 | A | 29 April 2015 |
| | | | | EP | 2894182 | A1 | 15 July 2015 |
| | | | | EP | 2894182 | A4 | 11 May 2016 |
| | | | | JP | 2015-530435 | A | 15 October 2015 |
| | | | | JP | 6199392 | B2 | 20 September 2017 |
| | | | | KR | 10-1992391 | B1 | 30 September 2019 |
| | | | | KR | 10-2014-0031010 | A | 12 March 2014 |
| | | | | TW | 201410735 | A | 16 March 2014 |
| | | | | TW | I603994 | B | 01 November 2017 |
| | | | | US | 9637589 | B2 | 02 May 2017 |
| | | | | WO | 2014-038774 | A1 | 13 March 2014 |

Form PCT/ISA/210 (patent family annex) (July 2022)

**EP 4 421 105 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100584054